# EUROPEAN PATENT APPLICATION

(11) **EP 4 525 005 A1**
(43) Date of publication of application: **19.03.2025**
(21) Application number: 24198857.5
(22) Date of filing: 06.09.2024
(51) Int. Cl.: H01F 6/02, H01F 6/06

(54) **SUPERCONDUCTING COIL DEVICE**

(30) Priority: 12.09.2023 JP 2023147498; 21.08.2024 JP 2024139637
(71) Applicant: RIKEN, Wako-shi, Saitama 351-0198 (JP); Jeol Ltd., Akishima-shi, Tokyo 196-8558 (JP)
(72) Inventor: YANAGISAWA, Yoshinori, Tokyo, 196-8558 (JP); TANAKA, Yuya, Saitama, 351-0198 (JP); SUETOMI, Yu, Saitama, 351-0198 (JP); KAWAHATA, Mizuho, Saitama, 351-0198 (JP)
(74) Representative: Boult Wade Tennant LLP

(57) **Abstract**

A superconducting coil device (10) includes a superconducting coil (11) and adhesive layer (12). The superconducting coil (11) includes a superconducting wire (1) wound into a coil shape. An electrical conductivity is imparted to the adhesive layer (12). The adhesive layer (12) constitutes at least a part of a current bypass for the superconducting coil (11). The adhesive layer (12) includes a binder (12a). The adhesive layer (12) includes a resistance-decrease suppression structure that imparts the electrical conductivity to the adhesive layer (12) while suppressing a decrease in contact resistance with the superconducting wire (11).

## Description

### BACKGROUND

### 1. Field of the Invention

The present invention relates to a superconducting coil device that includes a superconducting coil constituted by a superconducting wire wound into a coil shape. More specifically, the present invention relates to the superconducting coil device that includes a current bypass for the superconducting coil.

### 2. Description of the Related Art

A superconducting coil device allows large current to flow at a small loss, and can thereby generate a strong magnetic field. Such a superconducting coil device is used, for example, in nuclear magnetic resonance (NMR), magnetic resonance imaging (MRI), a magnet for a physical experiment, an accelerator, a maglev train, a nuclear fusion reactor, a motor, an electric generator, a silicon single-crystal pulling device, an aluminum melting device, or the like.

In the superconducting coil device, there is a case where a superconducting coil suddenly or gradually transitions from a superconducting state to a normal conducting state. This phenomenon is referred to as quenching. In some cases, joule heat generated at the time of the quenching causes a temperature of the superconducting coil to rise excessively, and as a result, the superconducting coil is damaged (burnt out). For this reason, a technique important for the superconducting coil device is one of suppressing occurrence of the quenching or preventing the coil from being damaged when the quenching occurs. This technique is referred to as a quenching protection technique.

This type of technique has been established for a coil made of a low-temperature superconductor (LTS) wire that has already been widely put into practical use. However, such a technique is still in an immature stage, for a coil made of a high-temperature superconductor (HTS) wire as a next-generation material.

In light of this situation, several techniques (such as a no-insulation method and a metal-as-insulation method) have been proposed. These techniques are ones for forming a current bypass that electrically connects, to each other, a plurality of turns of a high-temperature superconducting wire wound in a coil shape. The research and development are underway in this field. Such techniques are disclosed in Patent Literature 1 and Non-Patent Literature 1, for example.

Patent Literature 1 and Non-Patent Literature 1 disclose an intra-layer no-insulation (LNI) method devised by the inventors of the present application. In other words, according to Patent Literature 1 and Non-Patent Literature 1, when a plurality of layers of solenoid coils arranged in a radial direction are formed by one superconducting wire or a plurality of superconducting wires, the mutually adjacent layers are insulated from each other by an insulation sheet, and a plurality of turns of the solenoid coil in each of the layers contact with a copper sheet. Such a copper sheet forms a current bypass that diverts current when quenching occurs.

### [Citation List]

### [Patent Literatures]

[Patent Literature 1] International Publication No. 2021/172276

### [Non-Patent Literatures]

[Non-Patent Literature 1] Y. Suetomi et al., "Quench and self-protecting behaviour of an intra-layer no-insulation (LNI) REBCO coil at 31.4 T", Supercond. Sci. Technol. 34 (2021) 064003 (18pp)
[Non-Patent Literature 2] Suetomi et al., "Design study of an intra-Layer No-Insulation (LNI) REBCO coil for conduction-cooled All-HTS 900 MHz NMR magnets", Cryogenics and Superconductivity Society of Japan, 104th Fall 2022, 2A-a01, 2022
[Non-Patent Literature 3] Tanaka et al., "Development of contact resistivity control technology for intra-Layer No-Insulation (LNI) REBCO coils with conductive epoxy", Cryogenics and Superconductivity Society of Japan, 104th Fall 2022, 2A-a02, 2022

### BRIEF SUMMARY

### TECHNICAL PROBLEM

In the superconducting coil device, a value of a contact resistivity (hereinafter, simply referred to as a contact resistivity) between the superconducting wire (the above-described turn) and a current bypass influences occurrence of quenching and protection of the coil at the time of occurrence of quenching. For example, when a contact resistivity is excessively large, a temperature becomes high at the time of occurrence of quenching, thus causing thermal damage. When a contact resistivity is excessively small, large induced current is locally generated at the time of occurrence of quenching, thus causing mechanical damage due to electromagnetic force. This type of induced current is generated when current in a certain turn decreases so that current in a strongly magnetically-coupled nearby turn increases to compensate for a decrease in magnetic flux caused by the current decrease in the certain turn. The contact resistivity is defined, for example, as a product [Ωcm²] of a resistance [Ω] between the superconducting wire and the current bypass and a contact area (or adhesion area) [cm²] between the superconducting wire and the current bypass. The thus-defined contact resistivity is referred to also as a bypass resistance, in some cases. Hereinafter, the term "contact resistivity" is mainly used, but a contact resistivity and a bypass resistance are synonymous with each other.

In order to prevent occurrence of quenching or to protect the superconducting coil after quenching, a contact resistivity is desirably adjusted to a desired value or a value in a desired range in such a way as not to be excessively small. For example, according to the recent research, a contact resistivity of at least 10 mΩcm² or at least 100 mΩcm² is necessary in a superconducting coil for use in a strong magnetic field (refer to Non-Patent Literatures 2 and 3). In addition, in order to effectively avoid an excessive increase in induced current in other turns caused by a current decrease in a certain turn due to quenching, it is also effective to take into account a strength of magnetic coupling between the turns and thus set a contact resistivity to an appropriate value, depending on a location in the superconducting coil.

However, as described above, when turns of the superconducting coil are made to contact with a metal conductor (e.g., the above-described copper sheet) of the current bypass, a contact resistivity is a small value of approximately 0.1 to 1 mΩcm² for example, and is difficult to adjust.

In light of this, Non-Patent Literature 3 discloses that electrically conductive epoxy as a mixture of an epoxy resin and an electrically conductive filler is used as a contact interface with the superconducting coil. Based on this disclosure, for example, it can be considered to electrically connect a plurality of turns of the superconducting coil to the above-described copper sheet via the electrically conductive epoxy.

However, in this case, when a thickness of the electrically conductive epoxy is made small (e.g., at most 30 µm or at most 20 µm), the superconducting wire comes into direct contact with the copper sheet at many locations. This is caused by unevenness of surface shapes of the superconducting wire and the copper sheet. This phenomenon was found out by the inventors. As a result of the phenomenon, a contact resistivity between the superconducting wire and the copper sheet via the conductive epoxy becomes excessively small or significantly varies. Thus, it is difficult to adjust a contact resistivity to a desired value or a value in a desired range. Meanwhile, it can be considered to make a thickness of the electrically conductive epoxy large in order to adjust a contact resistivity to a desired value or a value in a desired range in such a way as not to be excessively small. However, in this case, the superconducting coil device becomes large in size, or the electrically conductive epoxy can become a factor in inhibiting cooling.

In view of the above, an object of the present invention is to provide a technique by which in a case where a current bypass is formed by using an electrically conductive adhesive layer, even when a thickness of the adhesive layer is thin (e.g., equal to or smaller than 30 µm, or equal to or smaller than 20 µm), a contact resistivity via the adhesive layer can be prevented from becoming excessively small, or the contact resistivity can be adjusted to a desired value or a value in a desired range.

### SOLUTION TO PROBLEM

In order to accomplish the above-described object, a superconducting coil device according to the present invention includes a superconducting coil and adhesive layer. The superconducting coil includes a superconducting wire wound into a coil shape. An electrical conductivity is imparted to the adhesive layer. The adhesive layer constitutes at least a part of a current bypass for the superconducting coil. The adhesive layer includes a binder. The adhesive layer includes a resistance-decrease suppression structure that imparts the electrical conductivity to the adhesive layer while suppressing a decrease in contact resistance with the superconducting wire.

### ADVANTAGEOUS EFFECTS

According to the present invention, the adhesive layer including the binder includes the resistance-decrease suppression structure that imparts an electrical conductivity to the adhesive layer while suppressing a decrease in contact resistance with the superconducting wire. Thereby, a contact resistivity via the adhesive layer can be prevented from unintentionally becoming excessively small.

### BRIEF DESCRIPTION OF DRAWINGS

FIG. 1 is a perspective view illustrating a section of a superconducting coil device according to a first embodiment of the present invention.
FIG. 2 is an exploded illustration of a winding structure of a superconducting wire.
FIG. 3 is an enlarged view of the area R1 enclosed by the broken line in FIG. 1.
FIG. 4 is a partially enlarged view of FIG. 3, and illustrates a cross-sectional structure of the superconducting wire.
FIG. 5A is a partial enlarged view of FIG. 3, and schematically illustrates a first configuration example of an adhesive layer.
FIG. 5B is a partial enlarged view of FIG. 3, and schematically illustrates a second configuration example of an adhesive layer.
FIG. 6 is a graph representing a contact resistivity measured for an adhesive layer in each of first and second implemented examples and first and second reference examples.
FIG. 7A is a graph representing a contact resistivity measured for an adhesive layer in a third implemented example.
FIG. 7B represents a current-voltage property of the adhesive layer in the third implemented example.
FIG. 8 is a table representing the result of the experiment concerning an insulation filler of the adhesive layer.
FIG. 9A is a graph representing a transition of a contact resistivity when a superconducting coil is repeatedly changed between a superconducting state and a normal-temperature state.
FIG. 9B is a graph representing a transition of a critical current value when a superconducting coil is repeatedly changed between a superconducting state and a normal-temperature state.
FIG. 10A is an enlarged view of the area R2 enclosed by the broken line in FIG. 1, but illustrates a case in the second embodiment.
FIG. 10B is an enlarged view of the area R3 enclosed by the broken line in FIG. 1, but illustrates a case in the second embodiment.
FIG. 11A is an enlarged view of the area R2 enclosed by the broken line in FIG. 1, and illustrates a case in the first embodiment.
FIG. 11B is an enlarged view of the area R3 enclosed by the broken line in FIG. 1, and illustrates a case in the first embodiment.
FIG. 12 is a perspective view illustrating a section of a superconducting coil device according to a third embodiment of the present invention.
FIG. 13 is an enlarged view of the area R4 enclosed by the broken line in FIG. 12.
FIG. 14A is an enlarged view of the area R5 enclosed by the broken line in FIG. 12.
FIG. 14B is an enlarged view of the area R5 enclosed by the broken line in FIG. 12, but illustrates another configuration example.
FIG. 15 is an enlarged view of the area R4 enclosed by the broken line in FIG. 12, but illustrates another configuration example.
FIG. 16 is an enlarged view of the area R4 enclosed by the broken line in FIG. 12, but illustrates still another configuration example.
FIG. 17 is an enlarged view of the area R4 enclosed by the broken line in FIG. 12, but illustrates yet another configuration example.
FIG. 18A is a cross-sectional view illustrating a configuration example of a bundle-type superconducting wire according to a first modified example.
FIG. 18B is a cross-sectional view illustrating another configuration example of the bundle-type superconducting wire according to the first modified example.
FIG. 19A is an enlarged view of the area R1 enclosed by the broken line in FIG. 1, but illustrates a configuration example of a second modified example.
FIG. 19B is an enlarged view of the area R4 enclosed by the broken line in FIG. 12, but illustrates a configuration example of the second modified example.
FIG. 20A is an enlarged view of FIG. 3, but schematically illustrates a configuration example of an adhesive layer according to a fifth modified example.
FIG. 20B is an enlarged sectional view illustrating another configuration example of a fibrous body in the fifth modified example.
FIG. 20C is an enlarged view of FIG. 3, but schematically illustrates a case of using the fibrous body of FIG. 20B in the fifth modified example.
FIG. 21 illustrates the result of measuring a contact resistivity (bypass resistance) when a metal mesh is used as the fibrous body.
FIG. 22 represents a transition of a contact resistivity when the superconducting coil is repeatedly changed between a superconducting state and a normal-temperature state, in the case of using the fibrous body in the fifth modified example.

### DETAILED DESCRIPTION

### [Outline of Present Invention]

A superconducting coil device according to one aspect of the present invention includes a superconducting coil and an adhesive layer. The superconducting coil includes a superconducting wire wound into a coil shape. An electrical conductivity is imparted to the adhesive layer. The adhesive layer constitutes at least a part of a current bypass for the superconducting coil. The adhesive layer includes a binder. The adhesive layer includes a resistance-decrease suppression structure that imparts an electrical conductivity to the adhesive layer while suppressing a decrease in contact resistance (contact resistivity) with the superconducting wire.

In the first to third embodiments described below, the resistance-decrease suppression structure includes an electrically conductive filler and an insulation filler. Alternatively, in the fifth modified example described below, the resistance-decrease suppression structure includes a fibrous body (e.g., a metal mesh) formed with electrically conductive fiber.

The current bypass for the superconducting coil is a path (e.g., a path that diverts current) through which the current flows to avoid a certain part of the superconducting wire that forms the superconducting coil, when the certain part returns to a normal conducting state to have an electrical resistance. This current passes through the adhesive layer in the current bypass from one side in a thickness direction of the adhesive layer to an opposite side in the thickness direction of the adhesive layer.

In one configuration, as in the first to third embodiments described below, the current bypass is a path that electrically connects, to each other, at least a plurality of different locations (hereinafter, simply referred to as a plurality of the locations) in the superconducting wire that forms the superconducting coil. When quenching occurs in the superconducting coil, and a certain part in the superconducting wire and between a first location and a second location included in a plurality of the locations returns to a normal conducting state to have an electrical resistance, current flows through the current bypass from the first location to the second location instead of flowing through the certain part. In the first to third embodiments described below, a plurality of the locations are, for example, a plurality of turns in one layer (a coil layer described below) of the superconducting coil, or turns located at respective end portions of two mutually adjacent coil layers.

In another configuration, as in the first and second modified examples described below, when a certain location of a plurality of the locations in the superconducting wire returns to a normal conducting state due to occurrence of quenching to have an electrical resistance, current flows through the current bypass to another location in a plurality of the locations in such a way as to avoid the certain location. In the first and second modified examples described below, a plurality of the locations are a plurality of superconducting wires that constitute a bundle-type superconducting wire.

The current bypass may be provided within the superconducting coil. In the first to third embodiments described below, the current bypass is provided between the mutually adjacent coil layers that constitute the superconducting coil. In the first and second modified examples described below, the current bypass is provided between or among a plurality of superconducting wires that constitute the bundle-type superconducting wire.

According to the above-described superconducting coil device, the adhesive layer constituting the current bypass includes not only a binder and an electrically conductive filler but also an insulation filler, in the first to third embodiments described below. The insulation filler functions as a spacer in the adhesive layer. Thus, even when the adhesive layer is formed thin, the spacer prevents generation of a location where the low-resistance parts (e.g., a turn in the superconducting wire and a conductor portion that are described below) on both sides of the adhesive layer in a thickness direction of the adhesive layer contact directly with each other. For this reason, the adhesive layer existing in at least a part of the current bypass can prevent a contact resistivity via the adhesive layer from becoming excessively small. Thus, the electrically conductive filler and the insulation filler constitute the resistance-decrease suppression structure that imparts an electrical conductivity to the adhesive layer while suppressing a decrease in contact resistance (contact resistivity) with the superconducting wire. The resistance-decrease suppression structure in the case of the fifth modified example is described below. The adhesive layer may be provided at one end, both ends, or an intermediate portion in the current bypass in a direction in which current flows.

The adhesive layer may include, as the above-described electrically conductive filler, a plurality of types of electrically conductive fillers having mutually different electrical conductivities. In other words, a plurality of types of the electrically conductive fillers are formed of respective materials having mutually different electrical conductivities. In this case, adjusting a mixing ratio of a plurality of types of the electrically conductive fillers having mutually different electrical conductivities enables a contact resistivity with the superconducting wire to be adjusted to a desired value or a value in a desired range.

### [First embodiment]

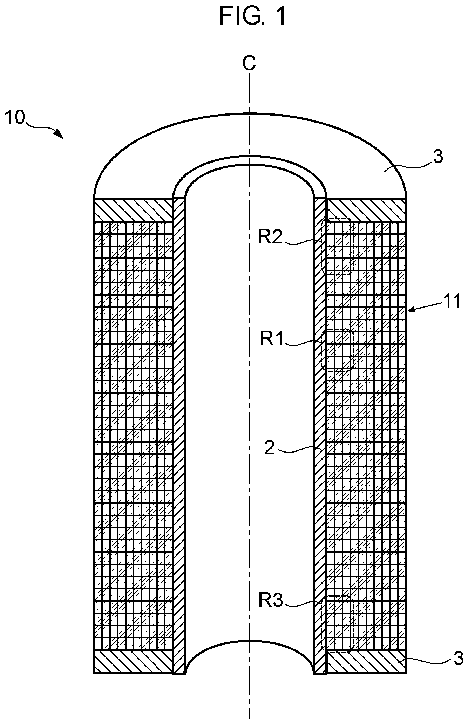

FIG. 1 is a perspective view illustrating one example of a section of a superconducting coil device 10 according to the first embodiment of the present invention. This section is taken by cutting with an imaginary plane including the central axis C of a superconducting coil 11 provided in the superconducting coil device 10. A section of the superconducting coil device 10 taken by cutting with any imaginary plane including the central axis C may be the same as the section illustrated in FIG. 1.

The superconducting coil device 10 is a device that generates a magnetic field by current flowing through the superconducting coil 11. The superconducting coil device 10 is used in NMR, MRI, a magnet for a physics experiment, an accelerator, a maglev train, a nuclear fusion reactor, a motor, an electric generator, a silicon single-crystal pulling-up device, an aluminum melting device, or the like, for example.

### <Configuration of Superconducting Coil>

The superconducting coil 11 is formed by winding a superconducting wire 1 in a coil shape. In the first embodiment, the superconducting wire 1 is wound (e.g., helically) around the central axis C of the superconducting coil 11 while being shifted in a direction (hereinafter, simply referred to also as an axial direction) parallel to the central axis C of the superconducting coil 11. Such a superconducting coil 11 may be a solenoid coil (cylindrical coil) as in the configuration example of FIG. 1, but may also have one of other shapes. Examples of such other shapes may include a racetrack shape and a D-shape, but there is no limitation to these.

The superconducting wire 1 may be wound around an outer peripheral surface of a reel 2 as illustrated in FIG. 1. A central axis of the reel 2 may coincide with the central axis C of the superconducting coil 11. The reel 2 may be cylindrical as illustrated in FIG. 1, but may have one of other shapes as long as the superconducting wire 1 can be wound in a coil shape around the outer peripheral surface of the reel 2. In FIG. 1, holding members 3 are attached to both of axial-direction end portions of the reel 2, and hold the axial-direction end portions of the superconducting coil 11.

The outer peripheral surface of the reel 2 may be formed of a material having an electrically insulating property. Otherwise, the superconducting wire 1 may be wound around the outer peripheral surface of the reel 2 via a sheet-shaped member having an electrically insulating property, for example, which is not illustrated in the drawing. The holding members 3 may be each formed of an electrically insulating material. The holding members 3 may each include a surface that contacts with the axial-direction end portion of the superconducting coil 11 and that is formed of an electrically insulating material. Otherwise, the holding members 3 each holds the axial-direction end portion of the superconducting coil 11 via a sheet-shaped member having an electrically insulating property, which is not illustrated in the drawing. The following description is made on the assumption that the area illustrated as the reel 2 is electrically insulating part in each of the drawings.

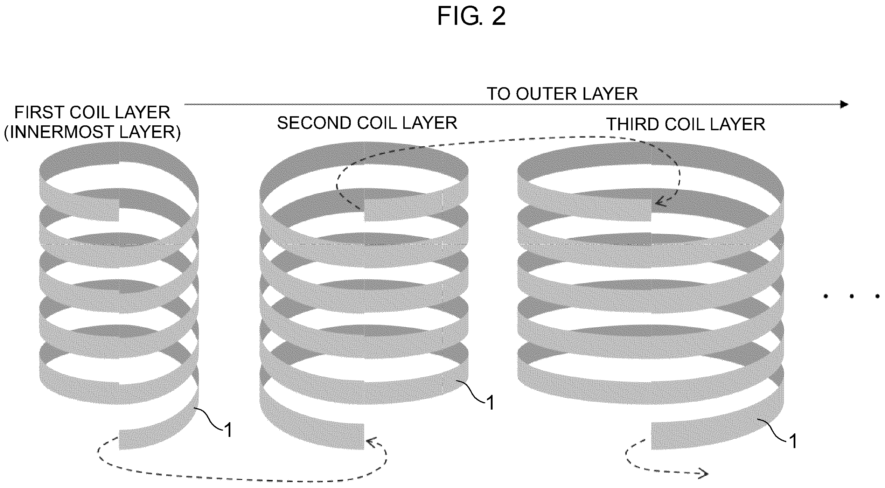

FIG. 2 is an exploded illustration of a winding structure of the superconducting wire 1. As illustrated in FIG. 2, one coil layer (hereinafter, simply referred to as a coil layer) in a radial direction (hereinafter, simply referred to as a radial direction) of the superconducting coil 11 is defined as a configuration in which the superconducting wire 1 is wound around the central axis C while being shifted in the axial direction. The superconducting coil 11 includes a plurality of coil layers adjacent to each other in the radial direction. First to third coil layers included in a plurality of (e.g., a large number of) these coil layers are illustrated in FIG. 2 in a manner of being separated from each other. A plurality of the coil layers have the common central axis C illustrated in FIG. 1.

A plurality of the coil layers are formed by superconducting wire 1. In other words, in one coil layer (the innermost layer in the radial direction), the superconducting wire 1 extends around the central axis C while being shifted in the axial direction from one axial-direction end to an opposite axial-direction end, and is then shifted outward in the radial direction to the next coil layer, and in the next coil layer (second layer), the superconducting wire 1 extends around the central axis C while being shifted in the axial direction from the opposite axial-direction end to the one axial-direction end, and is then shifted outward in the radial direction to the next coil layer (third layer), and then, the superconducting wire 1 repeats such extending. Here, the superconducting wire 1 may be one continuous superconducting wire, or may be constituted by a plurality of superconducting wires connected in series. In the latter case, the superconducting wire 1 may include a plurality of the superconducting wires connected in series and one or more connection portions between these superconducting wires. The connection portions may be made by soldering connection or heat treatment.

In FIG. 2, each of the broken-line arrows indicates a location (hereinafter, simply referred to as a shift location) where the superconducting wire 1 is shifted from the radial-direction inner coil layer to the next radial-direction outer coil layer. When a plurality of the coil layers are formed by the superconducting wire 1 constituted by a plurality of the superconducting wires connected in series, each shift location may be a location where an end portion of the superconducting wire forming the radial-direction inner coil layer and an end portion of the superconducting wire forming the radial-direction outer coil layer are connected to each other by the connection portion made by soldering connection, heat treatment, or the like. The number of the coil layers formed by the superconducting wire 1 may be two or three. In this case, the above-described extending is repeated until the second or third coil layer is formed. The number of the coil layers may also be four or more.

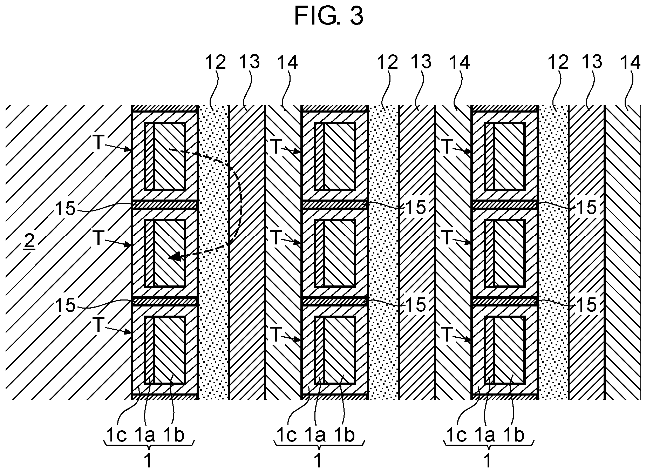

FIG. 3 is an enlarged view of the area R1 enclosed by the broken line in FIG. 1, and illustrates a schematic configuration of this area.

The superconducting wire 1 is configured to include a superconducting layer 1a formed of a superconducting material. The superconducting layer 1a may be a high-temperature superconducting layer 1a. Here, the "high-temperature superconducting layer 1a" may be generally a wire made of a superconductor material that has a critical temperature Tc (transition temperature) equal to or higher than approximately 25 K (e.g., higher than 25 K) in the absence of a magnetic field. For example, the high-temperature superconducting layer 1a may be a wire made of a superconductor material whose example is an iron-based superconductor or an oxide superconductor such as a copper-based superconductor.

More specifically, the high-temperature superconducting layer 1a may be a wire made of an yttrium-based superconductor or a bismuth-based superconductor. The high-temperature superconducting layer 1a may be a wire made of: a material expressed by the chemical formula YBa₂Cu₃O_{7-δ}; ReBa₂Cu₃O_{7-δ} expressed by replacing the element Y in the chemical formula YBa₂Cu₃O_{7-δ} with Re representing a rare earth element; or Bi₂Sr₂Caₙ₋₁CuₙO_{4+1n+δ} whose examples include Bi₂Sr₂CaCu₂O_{8+δ} (Bi2212) and Bi₂Sr₂Ca₂Cu₃O_{10+δ} (Bi2223). A wire used as the high-temperature superconducting layer 1a may be one made of the yttrium-based or bismuth-based superconductor on which oxide nanoparticles of zirconium, dysprosium, or the like are precipitated to improve a critical current property, or may be one made of the yttrium-based or bismuth-based superconductor of which part has been replaced with another element. A wire made of a metal-based superconductor such as MgB₂ having a superconducting transition temperature higher than 25 K may be used as the high-temperature superconducting layer 1a.

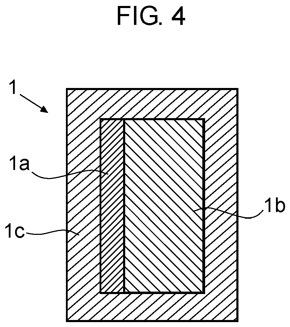

FIG. 4 is a partially enlarged view of FIG. 3, and illustrates a cross-sectional structure of the superconducting wire 1. The superconducting wire 1 may include not only the superconducting layer 1a but also a substrate layer 1b and a stabilization layer 1c for mechanical reinforcement and electrical stabilization. The superconducting layer 1a is placed on the substrate layer 1b via an intermediate layer (not illustrated), for example. The substrate layer 1b may be made of a metal (e.g., hastelloy). The intermediate layer may have a function of improving crystal orientation of the superconducting layer 1a and a function of suppressing reaction between the superconducting layer 1a and the metal substrate layer 1b. The stabilization layer 1c may be placed on the superconducting layer 1a via a silver protection layer (not illustrated), for example. The silver protection layer may be located on a surface that is included in the superconducting layer 1a and that is on an opposite side of the intermediate layer. The stabilization layer 1c may be provided in such a way as to cover an outer periphery of the entirety of the substrate layer 1b and the superconducting layer 1a (and the unillustrated intermediate layer and silver protection layer), as illustrated in FIG. 4, for example. The stabilization layer 1c is made of copper, for example.

### <Configuration of Current Bypass>

As illustrated in FIG. 3, the superconducting coil device 10 includes, in each coil layer, an electrically conductive adhesive layer 12 that contacts with a plurality of turns T of the superconducting coil 11. The adhesive layer 12 constitutes a current bypass that electrically connects a plurality of the turns T to each other.

As described below, the adhesive layer 12 includes a binder 12a (adhesive) having an electrically insulating property. An electrically conductive filler 12b is mixed in the binder 12a. Thereby, the adhesive layer 12 has an electrical conductivity. A more detailed configuration of the adhesive layer 12 is described below.

In the present embodiment, the superconducting coil device 10 further includes a conductor portion 13 and an interlayer insulation portion 14 in each coil layer. In other words, the adhesive layer 12, the conductor portion 13, and the interlayer insulation portion 14 are provided in association with each coil layer. Each of the adhesive layer 12, the conductor portion 13, and the interlayer insulation portion 14 may be formed in a layer or sheet shape having a small radial-direction thickness. In the present embodiment, each of the adhesive layer 12, the conductor portion 13, and the interlayer insulation portion 14 may extend in a peripheral direction and the axial direction (hereinafter, simply referred to also as the peripheral direction and the axial direction, respectively) of the superconducting coil 11 along the associated coil layer. Each of the adhesive layer 12, the conductor portion 13, and the interlayer insulation portion 14 may extend over the entirety of the associated coil layer. For example, each of the adhesive layer 12, the conductor portion 13, and the interlayer insulation portion 14 may be formed (e.g., in a cylindrical shape) in such a way as to extend round once in the peripheral direction. In an example of FIG. 3, the adhesive layer 12, the conductor portion 13, and the interlayer insulation portion 14 are provided in this order from a radial-direction inner side to a radial-direction outer side, between each pair of the mutually adjacent coil layers. However, this order may be reversed.

In each coil layer, the adhesive layer 12 also has a function of bonding the superconducting wire 1 and the conductor portion 13 to each other, with the below-described binder 12a, while the superconducting wire 1 extends around the central axis C. The adhesive layer 12 may contact with all the turns in the associated coil layer. Such an adhesive layer 12 may extend continuously in the axial direction and in the peripheral direction, over almost the entire coil layer.

The conductor portion 13 is formed of an electrically conductive material. This electrically conductive material may be copper, platinum, gold, silver, brass, stainless steel, or another metal, for example. The conductor portion 13 is provided in such a way as to be electrically connected via the adhesive layer 12 to a plurality of (e.g., all of) the turns T in the associated coil layer.

Accordingly, the adhesive layer 12 associated with each of the coil layers constitutes the current bypass in cooperation with the conductor portion 13 associated with the coil layer. The current bypass electrically connects, to each other, a plurality of the turns of the superconducting coil 11 in the coil layer. Thus, the current bypass is formed for each of the coil layers.

For example, the current bypass constituted by the adhesive layer 12 and the conductor portion 13 is a path that extends from any one (as a start turn) of the turns T to the conductor portion 13 via the adhesive layer 12, and then extends in the conductor portion 13 in the axial direction, and then reaches another (e.g., adjacent to the start turn) of the turns T from the conductor portion 13 via the adhesive layer 12, in the associated coil layer, for example as indicated by the broken-line arrow in FIG. 3.

The adhesive layer 12 may have an electrical conductivity smaller than that of the conductor portion 13. The adhesive layer 12 may have a resistance that is a resistance per unit length in a direction (e.g., the axial direction) perpendicular to the thickness direction of the adhesive layer 12 and that is smaller than a resistance per unit length (i.e., unit length in the direction in which the superconducting wire 1 extends) of the superconducting wire 1 in a normal conducting state and larger than a resistance per unit length of the superconducting wire 1 in a superconducting state. Thereby, when quenching occurs in the superconducting coil 11, an electrical resistance generated in the superconducting coil 11 that has returned to a normal conducting state causes current in the superconducting coil 11 to flow through the above-described current bypass. As a result, burnout of the superconducting coil 11 is prevented.

The interlayer insulation portion 14 associated with each of the coil layers is provided between the conductor portion 13 associated with the coil layer concerned and the coil layer (superconducting wire 1) adjacent to the coil layer concerned in such a way that the conductor portion 13 does not contact with the coil layer adjacent to the coil layer concerned in the radial direction.

### <Configuration of Adhesive Layer>

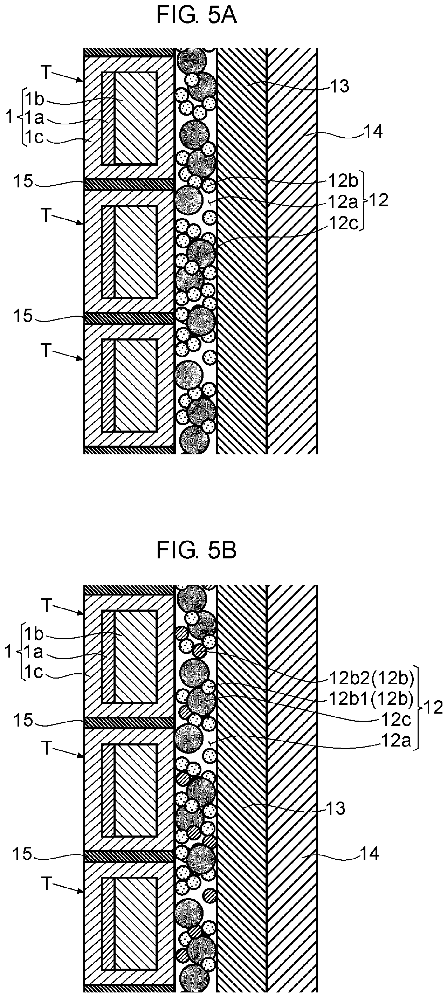

FIG. 5A and FIG. 5B are partial enlarged views of FIG. 3. FIG. 5A schematically illustrates a first configuration example of the adhesive layer 12. FIG. 5B schematically illustrates a second configuration example of the adhesive layer 12.

As illustrated in FIG. 5A or FIG. 5B, the adhesive layer 12 includes, as main components, the binder 12a, the electrically conductive filler 12b, and the insulation filler 12c. In other words, the adhesive layer 12 is a mixture in which the electrically conductive filler 12b and the insulation filler 12c are mixed into the binder 12a. The binder 12a may have an electrically insulating property, and meanwhile, the electrically conductive filler 12b has an electrical conductivity. Thereby, the adhesive layer 12 has an electrical conductivity in the thickness direction of the adhesive layer 12 (in the first embodiment, the radial direction of the superconducting coil 11). Meanwhile, according to an experiment, the adhesive layer 12 can be configured in such a way as not to substantially have an electrical conductivity in the direction (in the first embodiment, the axial direction and the peripheral direction of the superconducting coil 11) perpendicular to the thickness direction of the adhesive layer 12. The insulation filler 12c has an electrically insulating property. The insulation filler 12c may be magnesium oxide (MgO). The insulation filler 12c as MgO not only has both an electrically insulating property and a thermal conductivity, but also has a Mohs hardness of 5.5, which is not excessively large, so that particles as the insulation filler 12c are prevented from being crushed by pressure and from biting into the superconducting wire 1. However, a material of the insulation filler 12c is not limited to MgO, and any of other materials may be used for the insulation filler 12c. The binder 12a is an epoxy resin for example, but is not limited to this. The adhesive layer 12 may consist of the binder 12a, the electrically conductive filler 12b, and the insulation filler 12c, or may include one or more components in addition to the above-described main components.

In an example, a mass ratio of the insulation filler 12c to the binder 12a may be equal to or larger than 3% and equal to or smaller than 30%, or may be equal to or larger than 5% and equal to or smaller than 25%, or may be equal to or larger than 5% and equal to or smaller than 20%, but is not limited to these ranges.

An average particle diameter of the insulation filler 12c as particles may be larger than an average particle diameter of the electrically conductive filler 12b as particles, but is not limited to this. In the present application, an average particle diameter may be expressed as a circle equivalent diameter by a microscopic method, or a sphere equivalent diameter by a light scattering method.

An average particle diameter of the electrically conductive filler 12b as particles may be smaller than a thickness of the adhesive layer 12. In such a case, an average particle diameter of the electrically conductive filler 12b as particles may be a value (e.g., approximately 2/3 of, at least 1/2 of, at least 1/3 of, or at least 1/5 of the thickness of the adhesive layer 12) at the same level as the thickness of the adhesive layer 12. Similarly, an average particle diameter of the insulation filler 12c as particles may be smaller than the thickness of the adhesive layer 12. In such a case, an average particle diameter of the insulation filler 12c as particles may be a value (e.g., approximately 2/3 of, at least 1/2 of, at least 1/3 of, or at least 1/5 of the thickness of the adhesive layer 12) at the same level as the thickness of the adhesive layer 12. For example, a thickness of the adhesive layer 12 may be equal to or smaller than 30 µm. A lower limit of the thickness of the adhesive layer 12 is a thickness that can prevent the conductor portion 13 and the turn T (i.e., the superconducting wire 1) from contacting directly with each other to result in a short circuit. For example, the lower limit of the thickness of the adhesive layer 12 is approximately 20 µm (18 µm in one example), but is not limited to this value and may be appropriately changed.

In an example, an average particle diameter of the electrically conductive filler 12b as particles and an average particle diameter of the insulation filler 12c as particles may be each in a range equal to or larger than 5 µm and equal to or smaller than 25 µm, in a range equal to or larger than 10 µm and equal to or smaller than 20 µm, or in a range equal to or larger than 15 µm and equal to or smaller than 20 µm, but are not limited to these ranges.

In the present embodiment, the electrically conductive filler 12b and the insulation filler 12c are in a form of powder. However, in the first embodiment, the second embodiment, or the third embodiment, an electrically conductive fibrous filler may be used instead of the powdered electrically conductive filler 12b. Similarly, in the first embodiment, the second embodiment, or the third embodiment, an electrically insulating fibrous filler may be used instead of the powdered insulation filler 12c.

### - First Configuration Example

As illustrated in FIG. 5A, in a first configuration example, the number of types of the electrically conductive filler 12b mixed in the adhesive layer 12 is one. In other words, only the electrically conductive filler 12b of the same electrically conductive material (e.g., copper) exists as the electrically conductive filler 12b mixed in the adhesive layer 12.

### - Second Configuration Example

As illustrated in FIG. 5B, in a second configuration example, a plurality of types of the electrically conductive fillers 12b are mixed in the adhesive layer 12. In other words, a plurality of types of electrically conductive fillers having mutually different electrical conductivities exist as the electrically conductive fillers 12b mixed in the adhesive layer 12. In the example of FIG. 5B, the first type of the electrically conductive filler 12b1 and the second type of the electrically conductive filler 12b2 are mixed in the adhesive layer 12 as a plurality of types of the electrically conductive fillers 12b.

In one example, the first type of the electrically conductive filler 12b1 is made of copper (Cu), and the second type of the electrically conductive filler 12b2 is made of graphite (C). The number of a plurality of types of the electrically conductive filler 12b mixed in the adhesive layer 12 is not limited to two, and may be three or more.

### <Configuration for Insulation between Mutually Adjacent Turns>

The superconducting coil device 10 includes an inter-turn insulation portion 15 provided between each pair of the turns T adjacent to each other in the axial direction, in each coil layer. The inter-turn insulation portion 15 prevents the mutually adjacent turns T from contacting with each other in the axial direction. The inter-turn insulation portion 15 is formed of an electrically insulating material.

The inter-turn insulation portion 15 has a linear shape of extending around the central axis C, along the superconducting wire 1. In other words, the inter-turn insulation portion 15 may have the shape of being wound around the central axis C, along the superconducting wire 1, while being shifted in the axial direction. More specifically, the inter-turn insulation portion 15 may extend around the central axis C, along the superconducting wire 1, over the entirety (the entirety of the superconducting wire 1 in a direction in which the superconducting wire 1 extends around the central axis C) of the superconducting wire 1 in a longitudinal direction of the superconducting wire 1, while contacting with the superconducting wire 1 in the axial direction. Such an inter-turn insulation portion 15 may be a linear member extending around the central axis C. For example, the inter-turn insulation portion 15 may be a linear member including a copper wire whose entire outer periphery are covered with an electrically insulating material.

### <Advantageous Effects of First Embodiment>

According to the first embodiment, the following advantageous effects (1) to (6) can be achieved.
(1) According to the superconducting coil device 10 of the present embodiment, the current bypass is constituted by the adhesive layer 12 that includes not only the binder 12a and the electrically conductive filler 12b but also the insulation filler 12c. The insulation filler 12c functions as a spacer in the adhesive layer 12. In other words, the spacer prevents generation of a location where the conductor portion 13 contacts directly with (short-circuits with) the superconducting wire 1. Thus, even when a thickness of the adhesive layer 12 is made small, a contact resistivity between the turn T of the superconducting coil 11 and the current bypass (adhesive layer 12) can be prevented from becoming excessively small. For example, the contact resistivity can be set relatively large.
(2) In the above-described second configuration example, an electrical conductivity of the adhesive layer 12 can be adjusted to a desired value or a value in a desired range by adjusting a mixing ratio of a plurality of types of the electrically conductive fillers 12b1 and 12b2 having mutually different electrical conductivities. In other words, for example, as in the below-described third implemented example, changing a mass ratio of a plurality of types of the electrically conductive fillers 12b1 and 12b2 having mutually different electrical conductivities can change a contact resistivity, depending on the change of the mass ratio. Thereby, an electrical conductivity of the adhesive layer 12 can be adjusted to a desired value or a value in a desired range.
(3) The conductor portion 13 extends in the axial direction in such a way as to be adjacent to a plurality of the turns T arranged in the axial direction, and is electrically connected to a plurality of the turns T via the adhesive layer 12. Thus, the adhesive layer 12 and the conductor portion 13 can constitute the current bypass that achieves the above-described advantageous effects (1) and (2).
(4) The inter-turn insulation portion 15 is provided between each pair of the turns T adjacent to each other in the axial direction, and prevents the turns T from contacting with each other in the axial direction. Thereby, the current bypass constituted by the adhesive layer 12 and the conductor portion 13 is allowed to properly function. For example, even when a contact resistivity of the current bypass with the turn T is set high, current can be caused to flow from the turn T to the current bypass when quenching occurs.
(5) For each coil layer, the adhesive layer 12 extends in the axial direction and in the peripheral direction in such a way as to contact with outer peripheral surfaces of a plurality (all) of the turns T of the superconducting wire 1 forming the coil layer, and the conductor portion 13 extends in the axial direction and in the peripheral direction in such a way as to contact with the outer peripheral surface (entire outer peripheral surface) of the adhesive layer 12. Accordingly, cooling of the superconducting wire 1 can be promoted by heat transfer from the superconducting wire 1 to the conductor portion 13 via the adhesive layer 12. In this regard, the adhesive layer 12 can transfer the heat of the superconducting wire 1 to the conductor portion 13 mainly through the electrically conductive filler 12b and the insulation filler 12c in the adhesive layer 12. In this regard, for example, MgO as the insulation filler 12c has a relatively high thermal conductivity.
(6) The adhesive layer 12 in which the electrically conductive filler 12b and the insulation filler 12c are mixed mechanically bonds, to each other, a plurality (all) of the turns of the superconducting wire 1 of each coil layer in such a way as to be integrated with each other. Thereby, the superconducting coil structure can be strongly held against large electromagnetic force generated when a magnetic field is generated by current passing through the superconducting coil 11. Thus, the superconducting coil structure can be prevented from being broken or deteriorated in its property by collapse, buckling, peeling, or the like of the superconducting wire 1.

### <First and Second Implemented Examples: Case of Using One Type of Electrically Conductive Filler>

In each of first and second implemented examples and first and second reference examples, an adhesive layer was formed, and a contact resistivity of the adhesive layer with a superconducting wire was measured.

The first and second implemented examples correspond to the above-described first configuration example.

The adhesive layer 12 in the first implemented example is a layer in which graphite powder as the electrically conductive filler 12b and magnesium oxide (MgO) powder as the insulation filler 12c are mixed in the binder 12a of an epoxy resin. In the first implemented example, a content ratio of MgO to the entire adhesive layer 12 is 5 wt%.

The adhesive layer 12 in the second implemented example is a layer in which copper powder as the electrically conductive filler 12b and magnesium oxide (MgO) powder as the insulation filler 12c are mixed in the binder 12a of an epoxy resin. Also in the second implemented example, a content ratio of MgO to the entire adhesive layer 12 is 5 wt%.

The first and second reference examples correspond to a case where the adhesive layer is formed without an insulation filler.

The adhesive layer in the first reference example is a layer in which graphite powder as an electrically conductive filler is mixed in a binder of an epoxy resin.

The adhesive layer in the second reference example is a layer in which copper powder as an electrically conductive filler is mixed in a binder of an epoxy resin.

A contact resistivity with the superconducting wire was measured for the adhesive layer in each of the first and second implemented examples and the first and second reference examples. Specifically, the measurement was performed as follows. The adhesive layer 12 was arranged between two tape-shaped superconducting wires in such a way as to contact with these superconducting wires. A voltage V was applied between these two superconducting wires 1 in such a way that current is caused to flow from the one superconducting wire to the other superconducting wire through the adhesive layer. A value of this current was measured. A contact resistivity ρ_{ct} was measured from the applied voltage V, the measured value I of the current, and the known contact area A between the superconducting wire and the adhesive layer. In other words, a contact resistivity ρ_{ct} was calculated by ρ_{ct} = (V/I) × A.

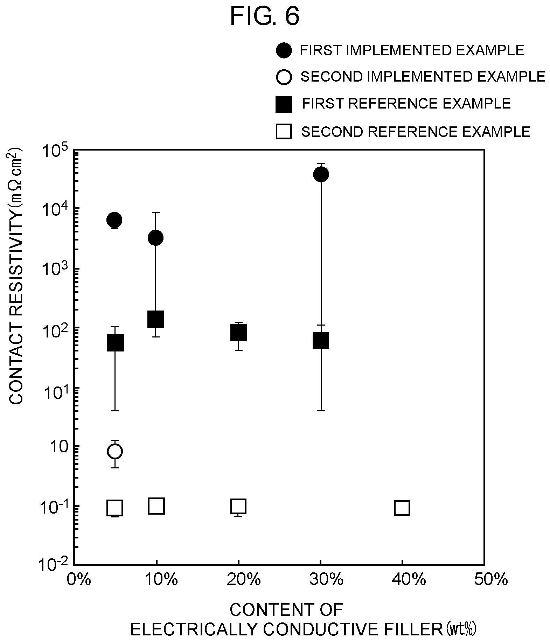

FIG. 6 is a graph representing the contact resistivity ρ_{ct} measured as described above for the adhesive layer in each of the first and second implemented examples and the first and second reference examples. In FIG. 6, the black circle plots indicate the case of the first implemented example, the white circle plots indicate the case of the second implemented example, the black square plots indicate the case of the first reference example, and the white square plots indicate the case of the second reference example. In FIG. 6, the horizontal axis indicates a content ratio (a content ratio of a combination of the electrically conductive filler 12b and the insulation filler 12c in the case of each of the first and second implemented examples) of the electrically conductive filler to the entire adhesive layer. In FIG. 6, the vertical axis indicates the measured value (mΩcm²) of the contact resistivity.

In the case of the first reference example, the contact resistivity was close to 100 mΩcm², but the contact resistivity could not be reliably made equal to or larger than 100 mΩcm². In other words, even when a content of the electrically conductive filler 12b (graphite powder) was changed, the contact resistivity did not change significantly. Further, a variation in a value of the contact resistivity was relatively large.

In the case of the second reference example, the contact resistivity was a low value of approximately 10⁻¹ mΩcm², and even when a content of the electrically conductive filler 12b (copper powder) was changed, the contact resistivity did not change significantly.

In contrast to these, in the first implemented example 1, even when a thickness of the adhesive layer 12 was made smaller than that in each of the first and second reference examples, further adding the insulation filler 12c to the adhesive layer 12 enabled the contact resistivity to be made significantly higher than that in each of the first and second reference examples. In other words, in the case where a thickness of the adhesive layer was made small, the contact resistivity in each of the first and second reference examples could not be substantially increased even when a content of the electrically conductive filler 12b was decreased, whereas the contact resistivity in each of the first and second implemented examples could be increased by further adding the insulation filler 12c.

Thus, even when a thickness of the adhesive layer 12 is made small, further adding the insulation filler 12c enables the contact resistivity of the adhesive layer 12 to be made greatly larger than that in the case without the insulation filler 12c, as in FIG. 6. For example, in the case of the first implemented example, the contact resistivity can be reliably made equal to or larger than 100 mΩcm² or made equal to or larger than 1000 mΩcm² without being excessively small.

### (Third Implemented Example: Case of Using Two Types of Electrically Conductive Fillers)

In the third implemented example, the adhesive layer 12 was formed to include two types of the electrically conductive fillers 12b1 and 12b2 having mutually different electrical conductivities, and a contact resistivity of the adhesive layer 12 with the superconducting wire 1 was measured while changing a ratio between the two types of the electrically conductive fillers 12b1 and 12b2.

The third implemented example corresponds to the above-described second configuration example.

The adhesive layer 12 in the third implemented example is a layer in which graphite powder and copper powder as the two types of the electrically conductive fillers 12b1 and 12b2 and magnesium oxide (MgO) powder as the insulation filler 12c are mixed in the binder 12a of an epoxy resin. In the third implemented example, a content ratio of MgO to the entire adhesive layer 12 is 10 wt%, and a content ratio of a combination of the two types of the electrically conductive fillers 12b1 and 12b2 to the entire adhesive layer 12 is 30 wt%.

In the third implemented example, while a content ratio of MgO to the entire adhesive layer 12 was fixed at 10 wt%, and a content ratio of a combination of the two types of the electrically conductive fillers 12b1 and 12b2 to the entire adhesive layer 12 was fixed at 30 wt%, a mass ratio between the two types of the electrically conductive fillers 12b1 and 12b2 was changed so that the adhesive layer 12 was formed for each of the changed mass ratios between the two types of the electrically conductive fillers 12b1 and 12b2. A contact resistivity of each of the thus-formed adhesive layers 12 was measured. A method for measuring the contact resistivity was the same as in the first and second implemented examples.

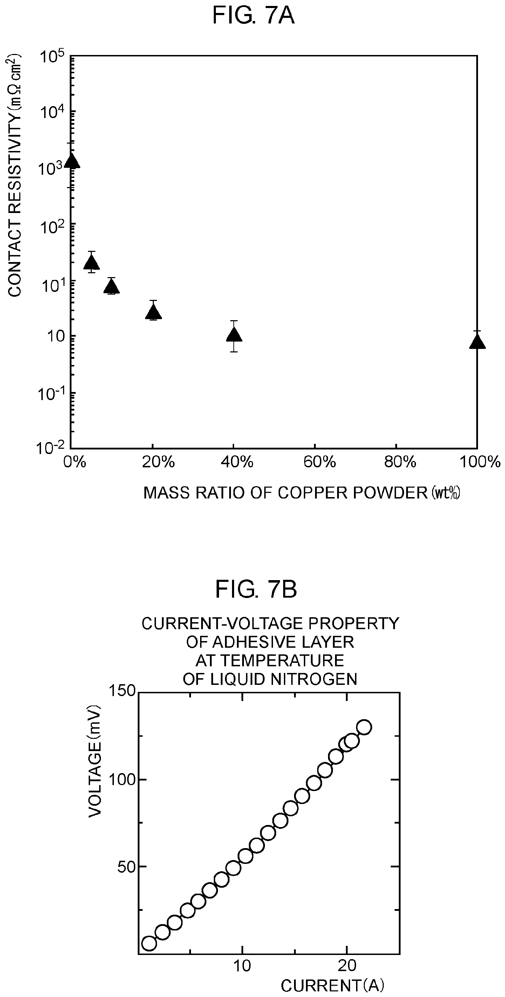

FIG. 7A is a graph representing the thus-measured contact resistivities ρ_{ct}. In FIG. 7A, the triangular plots indicate the measured values of the contact resistivities of the respective adhesive layers 12. In FIG. 7A, the horizontal axis indicates a mass ratio of the copper powder to the total mass of the graphite powder and the copper powder as the two types of the electrically conductive fillers 12b1 and 12b2. Accordingly, on the horizontal axis of FIG. 7A, 0% indicates the case (the case where a content ratio of the graphite content is 30%) where no copper powder exists in the adhesive layer 12, and 100% indicates the case (the case where a content ratio of the copper content is 30%) where no graphite powder exists in the adhesive layer 12.

In FIG. 7A, the contact resistivity gradually increases as a result of a gradual decrease of the mass ratio of the copper powder to the graphite powder. Thus, as illustrated in FIG. 7A, the conductivity of the adhesive layer 12 can be adjusted to a desired value or a value in a desired range by adjusting a mixing ratio (mass ratio) between the electrically conductive fillers 12b1 and 12b2 (the graphite powder and the copper powder) that have mutually different conductivities. In the present implemented example, the copper powder and the graphite powder were selected as the electrically conductive fillers 12b1 and 12b2. However, the electrically conductive fillers are not limited to the powder of these materials, and three or more types of powder made of mutually different materials may be used. Thereby, a contact resistivity within the range achieved in the present implemented example can be achieved.

FIG. 7B represents a current-voltage property of one sample (the adhesive layer 12 in which the mass ratio of the copper powder to the entire electrically conductive filler is 5%) in the third implemented example of the data represented in FIG. 7A. In FIG. 7B, the horizontal axis indicates current flowing through the adhesive layer 12 in the thickness direction thereof, and the vertical axis indicates the voltage applied to the adhesive layer 12 in the thickness direction thereof.

As illustrated in FIG. 7B, the voltage is generated linearly with respect to the current, and the simple resistance tendency was obtained. This tendency is an important property from the viewpoint of protection of the superconducting coil against quenching and designing of the superconducting coil. For example, the linear current-voltage property of the adhesive layer 12 prevents an excessive increase in induced current when quenching occurs, and eliminates necessity of taking into consideration a complex current-voltage property in designing of the superconducting coil, differently from the following case.

In a superconducting coil based on a well-known no-insulation method or metal-as-insulation method, or a superconducting coil based on an intra-layer no-insulation method that does not use the adhesive layer such as one in the present implemented example, a current bypass is formed between turns of superconducting coil or through an interface of direct contact between the turn and a conductor layer. At such an interface, a film of copper oxide or the like is formed on the surface of the turn or the surface of the conductor layer. This type of film has a nonlinear current-voltage property regardless of its thickness, in which when current increases, a voltage increases to saturate or decreases, or which exhibits a hysteresis. When the current bypass has such a property, induced current excessively increases when quenching occurs. It is difficult to take into consideration such a complex current-voltage property in designing of a superconducting coil.

### (First Experimental Example: Function of Insulation Filler)

An adhesive layer was formed by mixing only magnesium oxide (MgO) powder as the insulation filler 12c in the binder 12a of an epoxy resin. A contact resistivity of the adhesive layer with the superconducting wire 1 was measured in the same manner as that in the first and second implemented examples 1 and 2 while changing a content ratio of the MgO powder to the adhesive layer. In other words, the contact resistivity was measured in a state where the adhesive layer was sandwiched between the two superconducting wires.

In this measurement method, the measured contact resistance was used to check whether the two superconducting wires sandwiching the adhesive layer therebetween contact directly with (short-circuit with) each other. In other words, it was checked whether the MgO powder in the adhesive layer functioned as the above-described spacer.

When the adhesive layer is formed as thin as possible, a thickness of the adhesive layer depends on a content of the insulation filler 12c. In other words, a larger content of the insulation filler 12c results in a larger value of the possible minimum thickness of the adhesive layer. Thus, in the present experimental example, a thickness of the adhesive layer formed as thin as possible was measured for each content of the MgO powder.

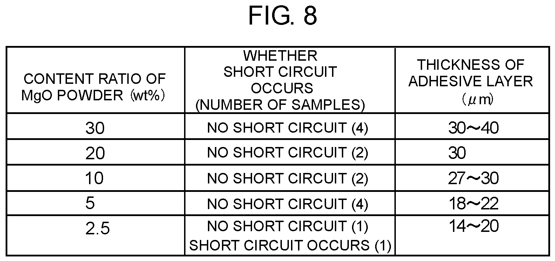

FIG. 8 is a table representing the result of such an experiment. The first line in the table of FIG. 8 indicates a content ratio of the MgO powder described above. This content ratio indicates a mass ratio of the MgO powder to the entire adhesive layer that is a combination of the binder 12a and the MgO powder. The second line in the table of FIG. 8 indicates whether a short circuit occurs between the two superconducting wires 1 that sandwich the above-described adhesive layer 12 (i.e., whether the MgO powder functions as the spacer) therebetween. The third line in the table in FIG. 8 indicates a thickness of the adhesive layer when the adhesive layer is formed as thin as possible as described above.

The result in FIG. 8 indicates that when a content ratio of the insulation filler 12c is equal to or larger than 5 wt%, no short circuit occurs. The result in FIG. 8 indicates that when a content ratio of the insulation filler 12c is smaller than 30 wt%, a thickness of the adhesive layer 12 can be made a small value equal to or smaller than 30 µm.

In light of such a result, for the adhesive layer 12 in the present embodiment, in order to avoid a short circuit between the superconducting wire 1 and the conductor portion 13, a mass ratio of the insulation filler 12c to a weight of a combination of the binder 12a and the insulation filler 12c is, for example, equal to or larger than 3 wt%, equal to or larger than 4 wt%, or equal to or larger than 5 wt%. For the adhesive layer 12 in the present embodiment, in order to reduce a thickness of the adhesive layer 12, a mass ratio of a weight of a combination of the electrically conductive filler 12b and the insulation filler 12c to the entire adhesive layer 12 may be, for example, smaller than 30 wt%, equal to or smaller than 25 wt%, or equal to or smaller than 20 wt%.

### (Second Experimental Example)

The superconducting coil device 10 of the second configuration example in the above-described embodiment was actually fabricated, and the superconducting coil 11 was placed in liquid nitrogen to be brought into a superconducting state. In this state, a contact resistivity of the current bypass with the turn T of the superconducting coil 11 was measured, and a critical current value of the superconducting coil 11 was measured. Then, the superconducting coil 11 was taken out from the liquid nitrogen to be brought into a normal conducting state, and is then placed in the liquid nitrogen again to be brought into a superconducting state. In this state, in the same manner, a contact resistivity was measured, and a critical current value of the superconducting coil 11 was measured. Such cooling cycle was repeated.

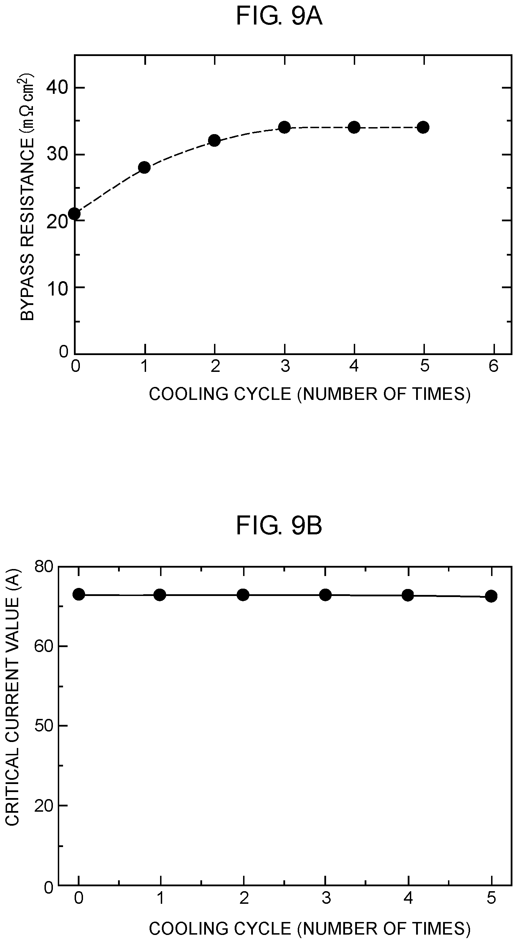

FIG. 9A and FIG. 9B are graphs representing a contact resistivity and a critical current value, respectively, that were measured for each of the cooling cycles. As represented in FIG. 9A, the contact resistivity (bypass resistance) did not fluctuate significantly, and was maintained at an almost stable value even when the cooling cycle was repeated. As represented in FIG. 9B, a critical current value stably remained constant even when the cooling cycle was repeated. Thus, it was confirmed that in the superconducting coil 11 of the present embodiment, a contact resistivity and a critical current value were stably kept constant even when the cooling cycle was repeated.

### [Second Embodiment]

The following describes a superconducting coil device 10 according to a second embodiment of the present invention. In the second embodiment, the matters that are not described below may be the same as those in the first embodiment. For example, the superconducting coil 11 may be a solenoid coil (cylindrical coil) as described above, or may also have another shape such as a racetrack shape or a D-shape.

### <Configuration of Superconducting Coil Device>

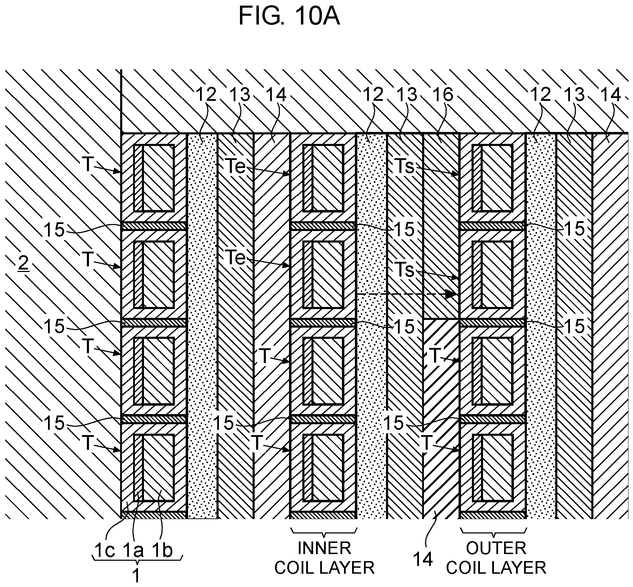

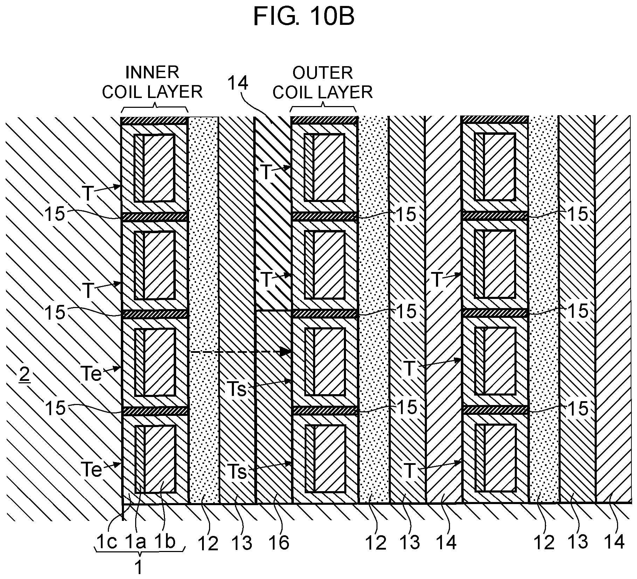

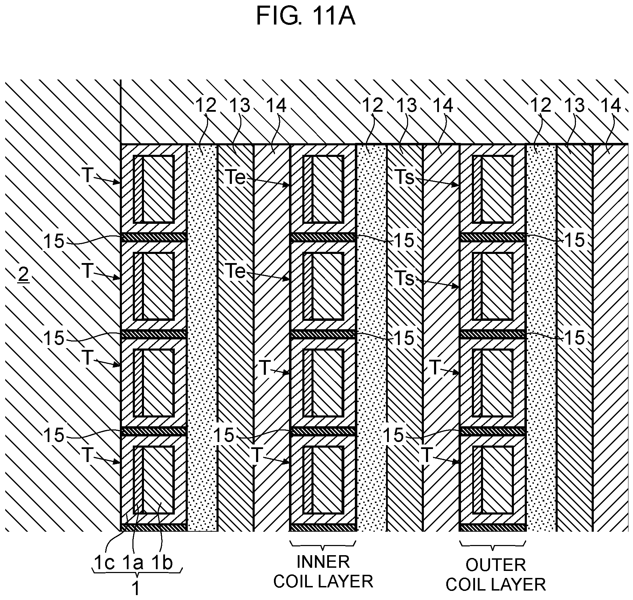

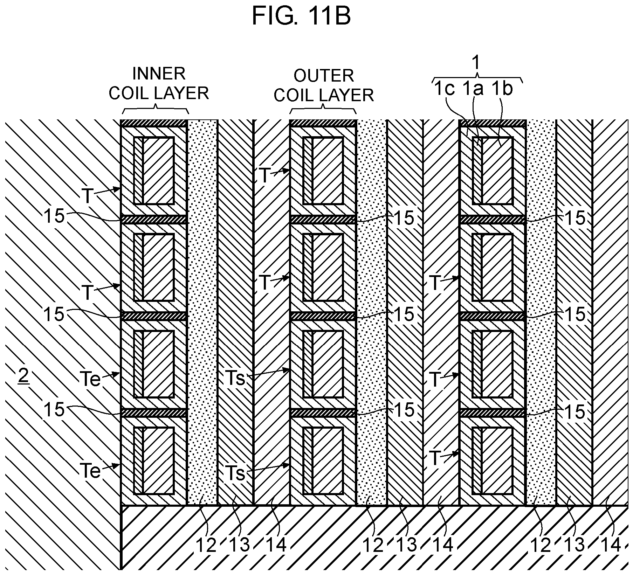

FIG. 10A and FIG. 10B are enlarged views of the areas R2 and R3, respectively, enclosed by the broken lines in FIG. 1, but illustrate cases in the second embodiment. Meanwhile, similarly, FIG. 11A and FIG. 11B are enlarged views of the areas R2 and R3, respectively, enclosed by the broken lines in FIG. 1, and illustrate cases in the above-described first embodiment.

Hereinafter, an inner coil layer and an outer coil layer refer to a specific pair of coil layers that are adjacent to each other in the radial direction. However, the following described matters concerning the inner coil layer and the outer coil layer applies to any pair of coil layers that are adjacent to each other.

The inner coil layer is the second coil layer from an inner inside in the radial direction in FIG. 10A and FIG. 11A, and is the first coil layer from an inner side in the radial direction in FIG. 10B and FIG. 11B. As in each of FIG. 10A to FIG. 11B, the superconducting wire 1 forms the inner coil layer by extending around the central axis C while being shifted in the axial direction from an axial-direction one end (the lower end in FIG. 10A, and the upper end in FIG. 10B) to an axial-direction opposite end, and is then shifted to a radial-direction outer side of the inner coil, and forms the outer coil layer by extending around the central axis C while being shifted in the axial direction from the axial-direction opposite end to the axial-direction one end.

In FIG. 10A to FIG. 11B, Te denotes a plurality (two in the examples of these drawings) of the turns T located at an axial-direction opposite end portion of the inner coil layer. The sign Ts denotes a plurality (two in the examples of these drawings) of the turns T located at an axial-direction opposite end portion of the outer coil layer.

In the above-described first embodiment, as illustrated in FIG. 11A and FIG. 11B, there is not an interlayer current bypass from the turns Te located at the axial-direction opposite end portion of the inner coil layer to the turns Ts located at the axial-direction opposite end portion of the outer coil layer. In this case, when quenching occurs near a part shifting from the inner coil layer to the outer coil layer in the superconducting wire 1, there is a possibility that the superconducting wire 1 is burned out.

In consideration of this point, in the second embodiment, as illustrated in FIG. 10A and FIG. 10B, an interlayer current bypass is formed in such a way as to electrically connect the one or more (two in FIG. 10A and FIG. 10B) turns Te located at the axial-direction opposite end portion of the inner coil layer to the one or more (two in FIG. 10A and FIG. 10B) turns Ts located at the axial-direction opposite end portion of the outer coil layer.

This interlayer current bypass is constituted by a part of the adhesive layer 12, a part of the conductor portion 13, and an interlayer conductor portion 16. This part of the adhesive layer 12 and this part of the conductor portion 13 are sandwiched in the radial direction between the axial-direction opposite end portion of the inner coil layer and the axial-direction opposite end portion of the outer coil layer. The interlayer conductor portion 16 electrically connects this part of the conductor portion 13 to the axial-direction opposite end portion of the outer coil layer.

More specifically, the interlayer conductor portion 16 contacts with the part of the conductor portion 13 from a radial-direction outer side, and contacts, from a radial-direction inner side, with the one or more (two in FIG. 10A and FIG. 10B) turns Ts located at the axial-direction opposite end portion of the outer coil layer. The interlayer conductor portion 16 may be formed in a sheet shape to have a small thickness in the radial direction. The interlayer conductor portion 16 may extend in the peripheral direction and in the axial directions along the conductor portion 13 and along the one or more turns Ts in such a way as to contact with the conductor portion 13 and the one or more turns Ts in the radial direction. For example, the interlayer conductor portion 16 may be formed in a shape (e.g., a cylindrical shape) of extending around once in the peripheral direction. The interlayer conductor portion 16 may be formed integrally with the conductor portion 13.

The above-described interlayer current bypass is, for example, a path that extends in the radial direction from the turns Te at the axial-direction opposite end portion of the inner coil layer in such a way as to reach the turns Ts at the axial-direction opposite end portion of the outer coil layer, via the adhesive layer 12, the conductor portion 13, and the interlayer conductor portion 16, as indicated by the broken-line arrow in FIG. 10A and FIG. 10B.

Thus, the superconducting coil device 10 according to the second embodiment includes the above-described interlayer conductor portion 16. This interlayer conductor portion 16 is provided instead of a part that is included in the interlayer insulation portion 14 and that is sandwiched in the radial direction between the axial-direction opposite end portion of the inner coil layer and the axial-direction opposite end portion of the outer coil layer in the first embodiment. In other words, in the second embodiment, this part of the interlayer insulation portion 14 is omitted, and the interlayer conductor portion 16 is provided in the region of the omitted part.

### <Advantageous Effects of Second Embodiment>

The following advantageous effect is achieved in addition to the above-described effects (1) to (6) of the first embodiment. In the superconducting coil 11, the interlayer current bypass is also formed for the turns Te and Ts at the part (the axial-direction opposite end portion) where the superconducting wire 1 returns between the inner coil layer and the outer coil layer. Thus, burnout due to occurrence of quenching can be prevented also for the axial-direction opposite end portion of the inner coil layer.

### [Third Embodiment]

The following describes the superconducting coil device 10 according to the third embodiment of the present invention. In the third embodiment, matters that are not described below may be the same as those in the first embodiment.

### <Configuration of Superconducting Coil Device>

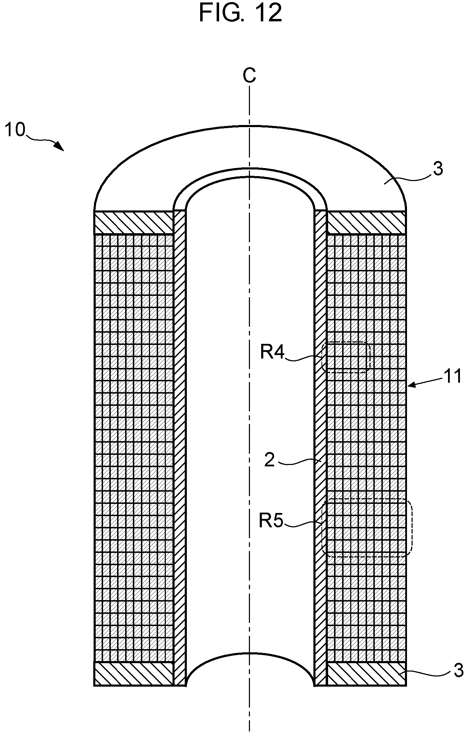

FIG. 12 is a perspective view illustrating a section of the superconducting coil device 10 according to the third embodiment of the present invention. This section is taken by cutting with an imaginary plane including the central axis C of the superconducting coil 11 provided in the superconducting coil device 10. Unless particularly described below, the section of the superconducting coil device 10 taken by cutting with any imaginary plane including the central axis C may be the same as the section illustrated in FIG. 12. The superconducting coil 11 may be a solenoid coil (cylindrical coil) as in the configuration example illustrated in FIG. 12, or may have another shape such as a racetrack shape or a D-shape.

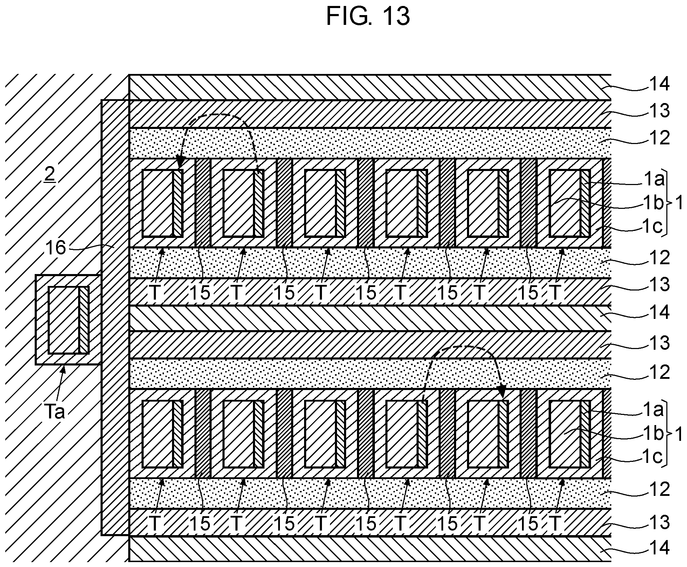

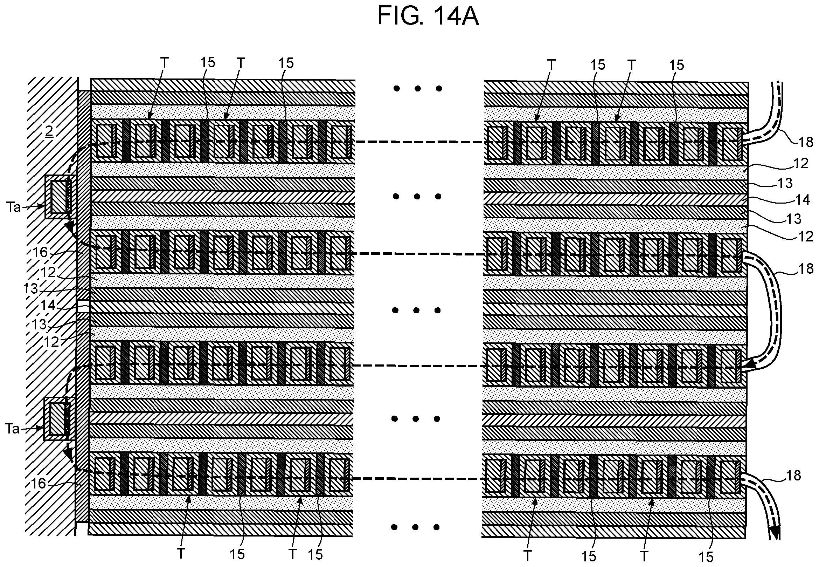

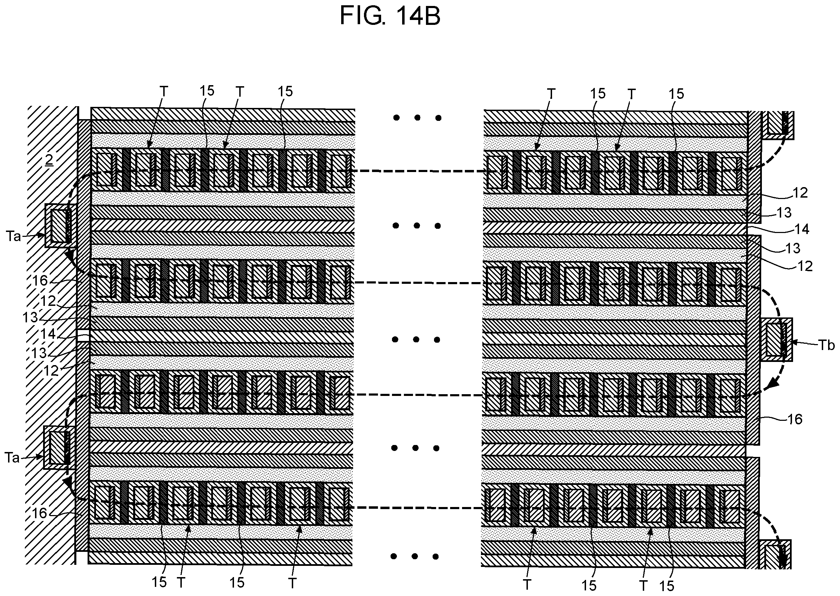

FIG. 13 is an enlarged view of the area R4 enclosed by the broken line in FIG. 12. FIG. 14A and FIG. 14B are each an enlarged view of the area R5 enclosed by the broken line in FIG. 12, but illustrate different configuration examples. In FIG. 14A and FIG. 14B, the broken-line arrows indicate the order in which current passes through a large number of the turns T while flowing in the peripheral direction.

### <Configuration of Superconducting Coil>

In the third embodiment, the superconducting coil 11 including the superconducting wire 1 wound in a coil shape is what is called a pancake coil. In other words, in the third embodiment, as illustrated in FIG. 12 to FIG. 14B, the superconducting wire 1 is wound around the central axis C a plurality of times (e.g., a large number of times) while a position of the superconducting coil 11 remains constant in the axial direction parallel to the central axis C. In other words, while the axial-direction position of the superconducting wire 1 remains constant, the superconducting wire 1 extends from the innermost position in the radial direction to the outermost position in the radial direction in such a way as to be shifted to a radial-direction outer side as the superconducting wire 1 extends around the central axis C. Here, the superconducting wire 1 may be one continuous superconducting wire, or may be constituted by a plurality of superconducting wires connected in series. In the latter case, the superconducting wire 1 may include a plurality of the superconducting wires connected in series and one or more connection portions between these superconducting wires. The connection portions may be made by soldering connection or heat treatment.

In the third embodiment, as illustrated in FIG. 12 to FIG. 14B, one coil layer (hereinafter, simply referred to as a coil layer) is defined as a configuration in which the superconducting wire 1 is shifted from a radial-direction inner end to a radial-direction outer end while extending around the central axis C and while the axial-direction position of the superconducting wire 1 remains constant.

According to the third embodiment, the superconducting coil 11 may be constituted by one coil layer, or may be constituted by a plurality (e.g., a large number) of coil layers arranged in the axial direction as illustrated in FIG. 12.

For example, a plurality of the coil layers may be formed by the superconducting wire 1 as follows.

For each pair of the coil layers that are continuous with each other on a radial-direction inner side and that are adjacent to each other in the axial direction, the superconducting wire 1 extends as follows in one example. As illustrated in FIG. 13, FIG. 14A, or FIG. 14B, from a position (a peripheral-direction position different from a peripheral-direction position of the section illustrated in each of these drawings) of forming the innermost turn T (the turn T on a left side in each of these drawings) in the one coil layer, the superconducting wire 1 further extends continuously in the peripheral direction while being shifted inward in the radial direction and toward the other coil layer in the axial direction. Thereby, the superconducting wire 1 forms an inner interlayer turn Ta (refer to FIG. 13, FIG. 14A, or FIG. 14B). Next, the superconducting wire 1 extends continuously in the peripheral direction in such a way as to be shifted outward in the radial direction and toward the other coil layer in the axial direction. Thereby, the superconducting wire 1 forms the innermost turn T (the turn T at a peripheral-direction position different from a peripheral-direction position of the section in FIG. 13) in the other coil layer. Here, as described above, the superconducting wire 1 may be one continuous superconducting wire, or may be constituted by a plurality of superconducting wires connected in series (the same applies to the following).

For each pair of the coil layers that are continuous with each other on a radial-direction outer side and that are adjacent to each other in the axial direction, an end portion included in the one coil layer and formed by the superconducting wire 1 may be connected to an end portion included in the other coil layer and formed by the superconducting wire 1, via a connection portion 18 formed by soldering connection, heat treatment, or the like, at a shift location between the coil layers, as illustrated in FIG. 14A.

In another example, for each pair of the coil layers that are continuous with each other on a radial-direction outer side and that are adjacent to each other in the axial direction, the superconducting wire 1 extends as follows. As illustrated in FIG. 14B, from a position (a peripheral-direction position different from a peripheral-direction position of the section illustrated in this drawing) of forming the outermost turn T in the one coil layer, the superconducting wire 1 further extends continuously in the peripheral direction while being shifted outward in the radial direction and toward the other coil layer in the axial direction. Thereby, the superconducting wire 1 forms an outer interlayer turn Tb (refer to FIG. 14B). Next, the superconducting wire 1 extends continuously in the peripheral direction in such a way as to be shifted inward in the radial direction and toward the other coil layer in the axial direction. Thereby, the superconducting wire 1 forms the outermost turn T in the other coil layer.

As illustrated in FIG. 14B, the inner interlayer turn Ta and the outer interlayer turn Tb may be provided alternately in the axial direction.

### <Configuration of Current Bypass>

The superconducting coil device 10 according to the third embodiment includes the adhesive layer 12 having an electrical conductivity and contacting with a plurality (e.g., all) of the turns T of the superconducting coil 11 in one coil layer. The adhesive layer 12 constitutes a current bypass that electrically connects, to each other, a plurality of the turns T in the one coil layer. A configuration of this adhesive layer 12 may be the same as that of the adhesive layer 12 (e.g., the adhesive layer 12 in the above-described first or second configuration example) in the first embodiment.

The superconducting coil device 10 according to the third embodiment includes the adhesive layer 12 and the conductor portion 13 in association with each coil layer.

In the examples of FIG. 13 to FIG. 14B, for each coil layer, the adhesive layer 12 and the conductor portion 13 are provided both on an axial-direction one side of the coil layer and on an axial-direction opposite side of the coil layer. Configurations each of which includes the coil layer, the adhesive layer 12, and the conductor portion 13 in such a way that the adhesive layer 12 and the conductor portion 13 are provided on each of the axial-direction one and opposite sides of the coil layer may be layered in the axial direction to be adjacent to each other via an interlayer insulation portion 14 in the axial direction. The adhesive layer 12 and the conductor portion 13 provided on the axial-direction one side of the coil layer are described below, but respective matters (configurations, arrangement, functions, and the like) of the adhesive layer 12 and the conductor portion 13 provided on the axial-direction opposite side of the coil layer are the same as the respective matters of the adhesive layer 12 and the conductor portion 13 provided on the axial-direction one side of the coil layer.

In the third embodiment, the adhesive layer 12 and the conductor portion 13 are provided in association with each coil layer. The adhesive layer 12 and the conductor portion 13 may be each formed in a layer or sheet shape having a small thickness in the axial direction. The thus-formed adhesive layer 12 and conductor portion 13 may extend in the peripheral direction and in the radial direction along the coil layer adjacent to the adhesive layer 12 and the conductor portion 13 in the axial direction. In this case, the adhesive layer 12 and the conductor portion 13 may each extend continuously in the peripheral direction and in the radial direction over the entirety of the associated coil layer.

The adhesive layer 12 associated with each coil layer also has a function of bonding, to the conductor portion 13, the superconducting wire 1 repeatedly extending around the central axis C in the coil layer.

The adhesive layer 12 associated with each coil layer constitutes the current bypass in cooperation with the conductor portion 13 associated with the coil layer. This current bypass electrically connects, to each other, a plurality of the turns of the superconducting coil 11 in the coil layer. Thus, the current bypass is formed for each coil layer.

For example, the current bypass constituted by the adhesive layer 12 and the conductor portion 13 is a path that extends from any one (as a start turn) of the turns T to the conductor portion 13 via the adhesive layer 12, and then extends in the conductor portion 13 in the radial direction, and then reaches another (e.g., adjacent to the start turn) of the turns T from the conductor portion 13 via the adhesive layer 12, in the associated coil layer, for example as indicated by the broken-line arrow in FIG. 13.

The interlayer insulation portion 14 is provided between each pair of the coil layers adjacent to each other in the axial direction, and electrically insulates these coil layers from each other. For each pair of the coil layers, the interlayer insulation portion 14 is provided between the one coil layer or the current bypass (i.e., the conductor portion 13) for the one coil layer and the other coil layer of the pair or the current bypass for the other coil layer. In this configuration, by the interlayer insulation portion 14, the conductor portion 13 associated with each coil layer is prevented from contacting with the adjacent coil layer (superconducting wire 1) adjacent to the coil layer concerned.

The other configurations of the conductor portion 13 and the interlayer insulation portion 14 may be the same as those of the conductor portion 13 and the interlayer insulation portion 14 in the first embodiment.

### <Configuration for Insulation between Adjacent Turns>

As illustrated in FIG. 13, the superconducting coil device 10 includes an inter-turn insulation portion 15 that is provided between each pair of the turns T adjacent to each other in the radial direction in each coil layer. The inter-turn insulation portion 15 prevents these turns T from contacting with each other in the radial direction. The inter-turn insulation portion 15 is formed of an electrically insulating material.

The inter-turn insulation portion 15 has a linear shape (e.g., a tape shape) of extending around the central axis C, along the superconducting wire 1. In other words, the inter-turn insulation portion 15 may have the shape of being wound around the central axis C, along the superconducting wire 1, while being shifted in the radial direction of the superconducting coil 11. More specifically, the inter-turn insulation portion 15 may extend around the central axis C, along the superconducting wire 1, over the entirety (the entirety of the superconducting wire 1 in a direction in which the superconducting wire 1 extends around the central axis C) of the superconducting wire 1 in a longitudinal direction of the superconducting wire 1, while contacting with the superconducting wire 1 in the radial direction.

### <Interlayer Current Bypass>

As illustrated in FIG. 13 to FIG. 14B, for each pair of the coil layers that are continuous with each other on a radial-direction inner side and that are adjacent to each other in the axial direction, an interlayer current bypass may be formed in such a way as to electrically connects the radial-direction innermost turn T in the one coil layer to the radial-direction innermost turn T in the other coil layer.

Such an interlayer current bypass is constituted by an interlayer conductor portion 16. For each pair of the coil layers described above, the interlayer conductor portion 16 may extend in the axial direction and in the peripheral direction in such a way as to contact with both the radial-direction innermost turn T in the one coil layer and the radial-direction innermost turn T in the other coil layer. In this regard, the interlayer conductor portion 16 may be connected to the radial-direction innermost turn T in the one coil layer and the radial-direction innermost turn T in the other coil layer via an adhesive layer (not illustrated in the drawing) having the same configuration as that of the adhesive layer 12. This adhesive layer has a thickness in a direction that is the radial direction of the superconducting coil 11.

Similarly, as illustrated in FIG. 14B, for each pair of the coil layers that are continuous with each other on a radial-direction outer side and that are adjacent to each other in the axial direction, an interlayer current bypass may be formed in such a way as to electrically connects the radial-direction outermost turn T in the one coil layer to the radial-direction outermost turn T in the other coil layer.

Such an interlayer current bypass is constituted by an interlayer conductor portion 16. For each pair of the coil layers described above, the interlayer conductor portion 16 may extend in the axial direction and in the peripheral direction in such a way as to contact with both the radial-direction outermost turn T in the one coil layer and the radial-direction outermost turn T in the other coil layer. In this regard, the interlayer conductor portion 16 may be connected to the radial-direction outermost turn T in the one coil layer and the radial-direction outermost turn T in the other coil layer via an adhesive layer (not illustrated in the drawing) having the same configuration as that of the adhesive layer 12. This adhesive layer has a thickness in a direction that is the radial direction of the superconducting coil 11.

For each pair of the coil layers, the interlayer conductor portion 16 may be arranged in such a way as to contact with a radial-direction inner end surface or a radial-direction outer end surface of each of the adhesive layer 12 and the conductor portion 13 associated with the one coil layer, and with a radial-direction inner end surface or a radial-direction outer end surface of each of the adhesive layer 12 and the conductor portion 13 associated with the other coil layer, as illustrated in FIG. 13, FIG. 14A, or FIG. 14B.

Further, for each pair of the coil layers, the interlayer conductor portion 16 may be provided in such a way as to contact with the interlayer turn (the interlayer turn Ta in FIG. 13 and the interlayer turn Tb in FIG. 14B) located between the coil layers. In this regard, the interlayer turn Ta or Tb located between the coil layers may be connected to the interlayer conductor portion 16 via an adhesive layer (not illustrated in the drawing) having the same configuration as that of the adhesive layer 12. This adhesive layer has a thickness in a direction that is the radial direction of the superconducting coil 11.

### <Another Configuration Example>

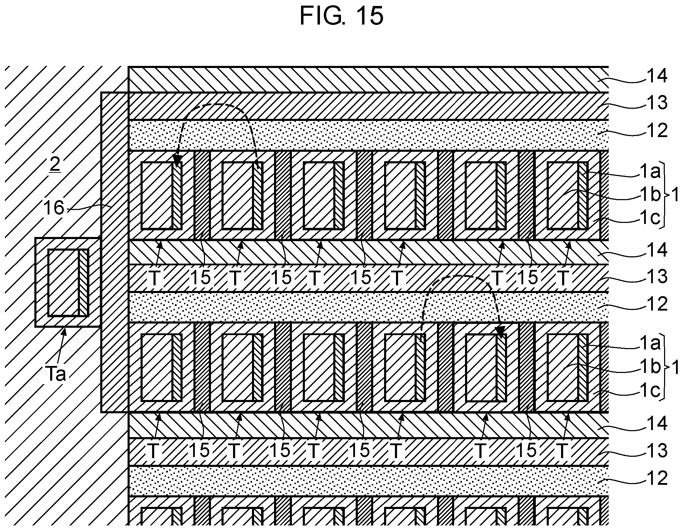

FIG. 15 is an enlarged view of the area R4 enclosed by the broken line in FIG. 12, and illustrates another configuration example of the third embodiment. In the configuration example of FIG. 15, for each coil layer, the adhesive layer 12 and the conductor portion 13 are provided only on an axial-direction one side of the coil layer or only on an axial-direction opposite side of the coil layer. The other matters in the configuration example of FIG. 15 may be the same as those in the configuration example of FIG. 13, FIG. 14A, or FIG. 14B, and thus, the description thereof is omitted.

### <Still Another Configuration Example>

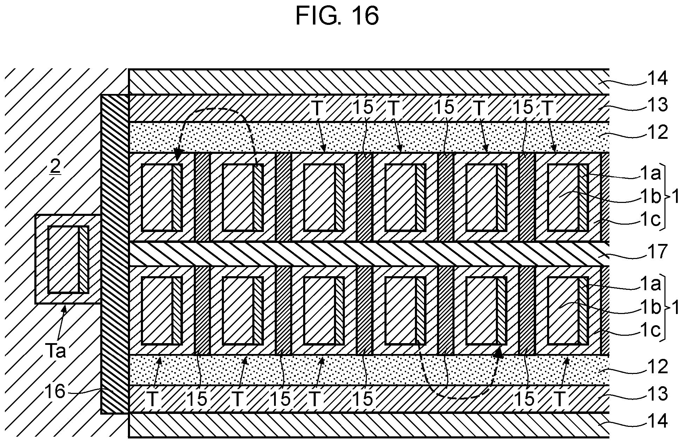

FIG. 16 is an enlarged view of the area R4 enclosed by the broken line in FIG. 12, and illustrates still another configuration example of the third embodiment. In the configuration example of FIG. 16, a double-pancake coil is formed by a pair of the coil layers adjacent to each other in the axial direction.

A pair of the coil layers constituting the double-pancake coil are electrically insulated from each other by an interlayer insulation portion 17 provided between these coil layers in the axial direction.

For a pair of the coil layers constituting the double-pancake coil, the adhesive layer 12 and the conductor portion 13 of each of these coil layers are provided on a side opposite to the other coil layer.

For a pair of the coil layers constituting the double-pancake coil, an inner or outer interlayer turn (the inner interlayer turn Ta in FIG. 16) may be provided between these coil layers, and the interlayer conductor portion 16 similar to that described above may be provided.

Configurations each including such a double-pancake coil and each including the adhesive layer 12 and the conductor portion 13 on each side of the double-pancake coil in the axial direction may be layered via the interlayer insulating portion 14 in the axial direction. A plurality or a large number of the double-pancake coils layered in this manner may be formed by the superconducting wire 1 in such a way as to form the above-described inner or outer interlayer turns Ta or Tb between the mutually adjacent double-pancake coils.

The other matters of the configuration example of FIG. 16 may be the same as those of the configuration example of FIG. 13, FIG. 14A, or FIG. 14B, and thus, the description thereof is omitted.

### (Yet Another Configuration Example)

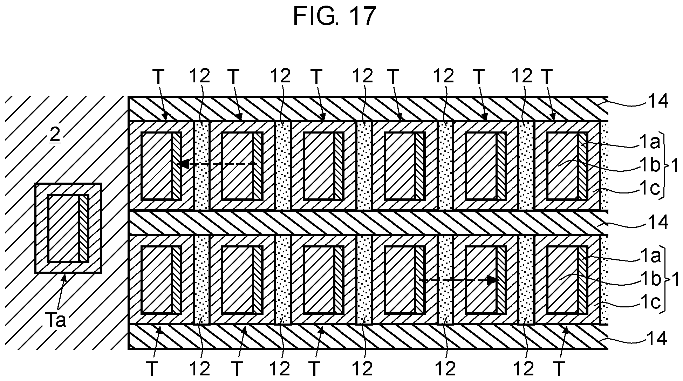

FIG. 17 is an enlarged view of the area R4 enclosed by the broken line in FIG. 12, and illustrates yet another configuration example of the third embodiment. In the configuration example of FIG. 17, the adhesive layer 12 is provided in each coil layer, instead of the above-described inter-turn insulation portion 15. In other words, in the configuration example of FIG. 17, the adhesive layer 12 is provided between each pair of the turns T adjacent to each other in the radial direction in each coil layer. Thereby, in each coil layer, the adhesive layer 12 forms a current bypass that electrically connects, to each other, each pair of the turns T adjacent to each other in the radial direction.

As indicated by the broken-line arrows in FIG. 17, the current bypass formed by the adhesive layer 12 is a path through which bypass current flows in the radial direction from any one of the turns T to the adjacent turn T via the adhesive layer 12. As illustrated in FIG. 17, in each coil layer, the adhesive layer 12 may contact with both of the turns T adjacent to each other in the radial direction while being located between these turns T.

The adhesive layer 12 has a linear shape (e.g., a tape shape) of extending around the central axis C (refer to FIG. 12) along the superconducting wire 1. In other words, in each coil layer, the adhesive layer 12 may extend around the central axis C along the superconducting wire 1 from a radial-direction inner end portion of the superconducting wire 1 to a radial-direction outer end portion of the superconducting wire 1 while being shifted in the radial direction of the superconducting coil 11.

In the configuration example of FIG. 17, similarly to the configuration example of FIG. 13, the interlayer insulation portion 14 is provided between each pair of the coil layers adjacent to each other in the axial direction, and electrically insulates these coil layers from each other. In the configuration example of FIG. 17, differently from the configuration example of FIG. 13, the adhesive layer 12 does not need to be provided between the coil layers adjacent to each other in the axial direction. In the configuration example of FIG. 17, differently from the configuration examples of FIG. 13 and FIG. 14B, the conductor portion 13 and the interlayer conductor portion 16 may be omitted. The other matters concerning the configuration example of FIG. 17 may be the same as those in the configuration example of FIG. 13, FIG. 14A, or FIG. 14B, and thus, the description thereof is omitted.

### <Advantageous Effects of Third Embodiment>

The third embodiment also achieves the above-described advantageous effects (1) and (2) in the first embodiment. The third embodiment also achieves the advantageous effects similar to the above-described advantageous effects (3) to (6) in the first embodiment, as described below.

As illustrated in FIG. 13 to FIG. 16, the conductor portion 13 extends in the radial direction in such a way as to be adjacent to a plurality of the turns T arranged in the radial direction, and is electrically connected to a plurality of these turns T via the adhesive layer 12. Thereby, the current bypass achieving the above-described advantageous effects (1) and (2) can be formed.

Alternatively, as illustrated in FIG. 17, each pair of the turns T adjacent to each other in the radial direction are electrically connected to each other by the adhesive layer 12 sandwiched between these turns T. Thereby, the current bypass achieving the above-described advantageous effects (1) and (2) can be formed.

As illustrated in FIG. 13 to FIG. 16, the inter-turn insulation portion 15 is provided between each pair of the turns T adjacent to each other in the radial direction, and prevents these turns T from contacting with each other in the radial direction.

As illustrated in FIG. 13 to FIG. 16, for each coil layer, the adhesive layer 12 extends in the radial direction and in the peripheral direction in such a way as to contact with axial-direction end surfaces of a plurality (all) of the turns T of the superconducting wire 1 forming the coil layer, and the conductor portion 13 extends in the radial direction and in the peripheral direction in such a way as to contact with the axial-direction end surface (entire axial-direction end surface) of the adhesive layer 12. Accordingly, cooling of the superconducting wire 1 can be promoted by heat transfer from the superconducting wire 1 to the conductor portion 13 via the adhesive layer 12.

The adhesive layer 12 mechanically bonds, to each other, a plurality (all) of the turns of the superconducting wire 1 of each coil layer in such a way as to be integrated with each other.

The present invention is not limited to the above-described embodiments, and it is apparent that various modifications may be made within the scope of the technical idea of the present invention. For example, the superconducting coil device according to each of the embodiments of the present invention does not need to include all of the above-described matters, and may include only a part of the above-described matters. Within the scope that enables solving of at least a part of the above-described problems, or within the scope that enables achieving of at least a part of the advantageous effects described in the present specification, one or more of the constituent elements described in claims or the present specification may be omitted, or any combination of the constituent elements described in claims or the present specification may be made.

Further, any one of the following first to seventh modified examples may be adopted, or two or more of the first to seventh modified examples may be arbitrarily combined to be adopted within a range where a technical contradiction does not occur. In this case, the matters that are not described below may be the same as those described above, or may be appropriately changed from those described above.

### (First Modified Example)

A bundle-type superconducting wire 1A may be used instead of the above-described superconducting wire 1. In other words, in each of the above-described first to third embodiments, a superconducting wire used instead of the above-described superconducting wire 1 may be the bundle-type superconducting wire 1A in which a plurality of superconducting wires 1 are bundled together.

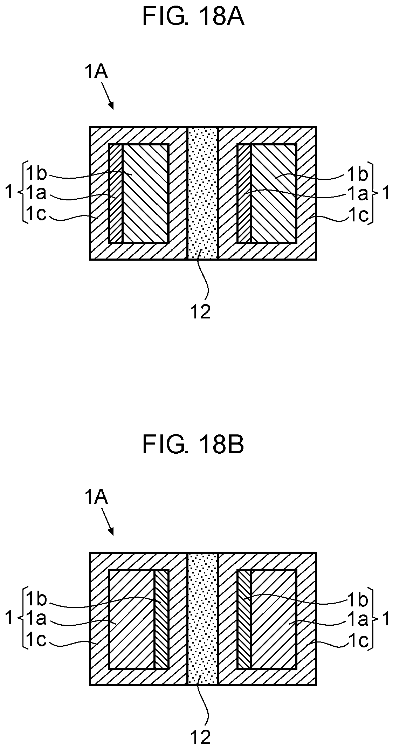

FIG. 18A and FIG. 18B are cross-sectional views illustrating configuration examples of such a bundle-type superconducting wire 1A. In the first modified example, a plurality of (two in FIG. 18A and FIG. 18B) the superconducting wires 1 are bonded to each other via the adhesive layers 12. Thereby, the adhesive layer 12 forms a current bypass between or among a plurality of the superconducting wires 1. The adhesive layer 12 also has a function of bonding a plurality of the superconducting wires 1 to each other with the binder 12a of the adhesive layer 12. A relative position of the superconducting layers 1a in the two superconducting wires 1 constituting the bundle-type superconducting wire 1A are different between FIG. 18A and FIG. 18B.

When the bundle-type superconducting wire 1A is used, in the above description of the first to third embodiments, each wording "the superconducting wire 1" may be replaced with the bundle-type superconducting wire 1A.

In a conventional bundle-type superconducting wire, two superconducting wires are bonded directly to each other. Thus, a contact resistance between the two superconducting wires is small, and is unstable to vary depending on a position. For this reason, there is a possibility that unbalanced current is generated at the time of exciting the superconducting coil, and excessive current flows at the time of quenching.

In contrast, in the first modified example, a plurality of the superconducting wires 1 constituting the bundle-type superconducting wire 1A are bonded to each other via the adhesive layer 12. Thus, a contact resistivity between a plurality of the superconducting wires 1 via the adhesive layer 12 (current bypass) is prevented from becoming excessively small, and a value of the contact resistivity can be adjusted to a desired value or a value in a desired range. Thereby, the above-described unbalanced current and excessive current can be suppressed.

### (Second Modified Example)

According to the second modified example, when the superconducting coil 11 is formed by the bundle-type superconducting wire 1A of the first modified example, the current bypass (the adhesive layer 12 and the conductor portion 13) that connects a plurality of the turns to each other may be omitted, and the interlayer current bypass (interlayer conductor portion 16) may be omitted.

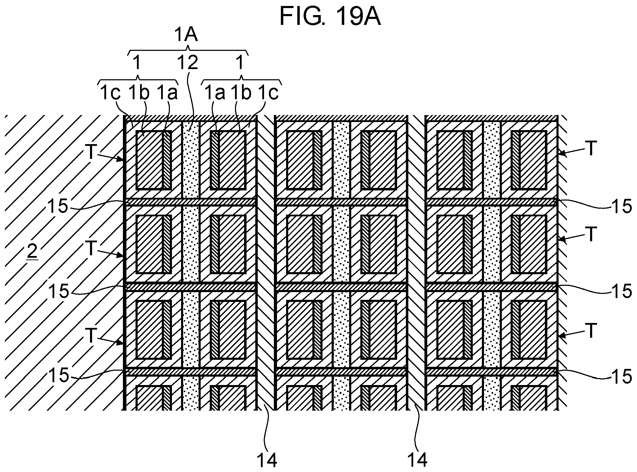

FIG. 19A is an enlarged view of the area R1 enclosed by the broken line in FIG. 1, but illustrates a configuration example of the second modified example. One coil layer in the radial direction is defined as a configuration in which the bundle-type superconducting wire 1A is wound around the central axis C while being shifted in the axial direction as illustrated in FIG. 19A. The superconducting coil 11 may include one coil layer or a plurality of the coil layers adjacent to each other in the radial direction. In each coil layer, the inter-turn insulation portion 15 is provided between each pair of the turns T adjacent to each other in the axial direction. The interlayer insulation portion 14 is provided between each pair of the coil layers adjacent to each other in the radial direction.

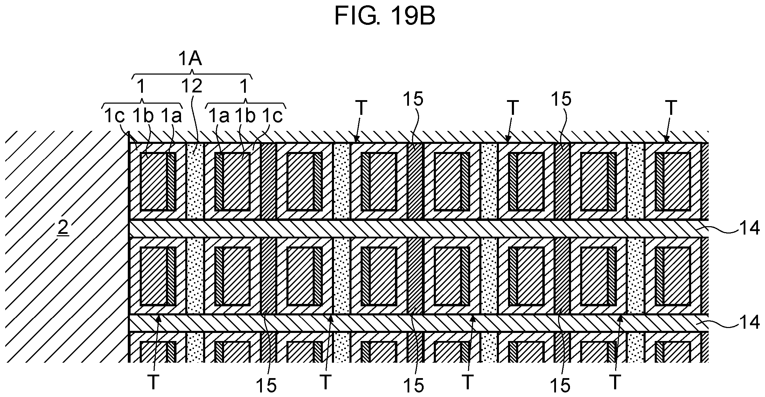

FIG. 19B is an enlarged view of the area R4 enclosed by the broken line in FIG. 12, but illustrates a configuration example of the second modified example. One coil layer in the axial direction is defined as a configuration in which the bundle-type superconducting wire 1A is shifted from a radial-direction inner end to a radial-direction outer end while extending around the central axis C and while the axial-direction position of the bundle-type superconducting wire 1A remains constant as illustrated in FIG. 19B. The superconducting coil 11 may include one coil layer or a plurality of the coil layers adjacent to each other in the axial direction. In each coil layer, the inter-turn insulation portion 15 is provided between each pair of the turns T adjacent to each other in the radial direction. The interlayer insulation portion 14 is provided between each pair of the coil layers adjacent to each other in the axial direction.

### (Third Modified Example)

The superconducting wire 1 is constituted by the superconducting layer 1a that is a high-temperature superconductor in the above description, but may be constituted by a superconducting layer 1a that is a low-temperature superconductor. In this case, for example, the superconducting wire 1 may include the superconducting layer 1a as the low-temperature superconductor and a stabilization layer that covers the superconducting layer 1a. The stabilization layer is formed of a material (e.g., copper or stainless steel) that stabilizes the superconducting state. The low-temperature superconductor may have a superconducting transition temperature that is equal to or higher than the boiling point (4.2 K) of liquid helium and equal to or lower than 25 K.

### (Fourth Modified Example)

According to the data in FIG. 7A for the third implemented example, for any implementation of the superconducting coil 11, the superconducting coil 11 can be fabricated in such a way that the contact resistivity varies depending on a location in the superconducting coil 11 to have a selected value or a value in a selected range. Thereby, an excessive temperature rise and an excessive increase in induced current (resultant mechanical damage) that accompany quenching can be effectively avoided as compared with a case where a single value of the contact resistivity is set for all locations. For example, in the superconducting coil 11, the contact resistivity at a location that is likely to become a quenching start point may be set smaller than that at each of other locations. Further, for example, in the superconducting coil 11, the contact resistivity at a location where induced current is likely to more increase due to magnetic coupling between the turns T may be set larger than that at each of other locations. Thereby, a temperature rise at the quenching start point can be suppressed, and a local increase in induced current can be suppressed. Magnitude of the induced current tends to be large not only at a location of being influenced by the magnetic coupling, but also at a location where the experience magnetic field is low and the superconducting critical current is large. For such a location, it is effective to set a larger value of the contact resistivity. A value of the contact resistivity can be selected by electric-circuit analysis or thermal-conduction analysis based on the specifications of the specific superconducting coil.

### (Fifth Modified Example)

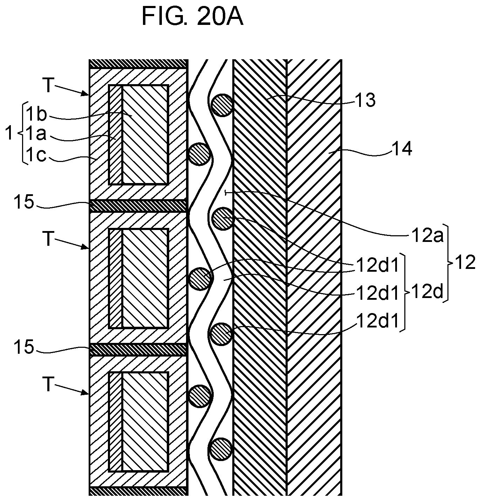

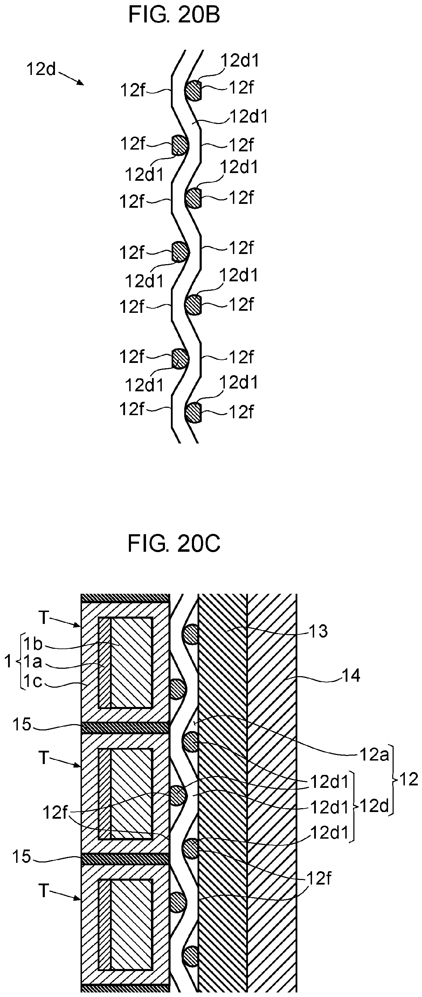

FIG. 20A corresponds to an enlarged view of FIG. 5A, but illustrates a case of the fifth modified example. In other words, FIG. 20A illustrates a configuration example in which the adhesive layer 12 in the fifth modified example is applied to the adhesive layer 12 in the first embodiment. However, the adhesive layer 12 in the fifth modified example may be applied to the adhesive layer 12 in the second embodiment, the third embodiment, the first modified example, or the second modified example. In other words, the adhesive layer 12 in the fifth modified example described below with reference to FIG. 20A or FIG. 20B and FIG. 20C may be any one of the adhesive layers 12 in the first embodiment, the second embodiment, the third embodiment, the first modified example, and the second modified example. In the fifth modified example, one or both of the above-described third or fourth modified examples may be adopted.

As illustrated in FIG. 20A, the adhesive layer 12 in the fifth modified example includes a fibrous body 12d having an electrical conductivity, instead of the powdered electrically conductive filler 12b and the powdered insulation filler 12c described above. In other words, in the fifth modified example, the adhesive layer 12 includes the binder 12a and the fibrous body 12d. For example, the adhesive layer 12 may be formed by impregnating the fibrous body 12d with the binder 12a (e.g., by vacuum pressure impregnation), or by applying the binder 12a to the fibrous body 12d. The binder 12a may be applied to the fibrous body 12d and the bonding-targets (the superconducting wire 1 and the conductor portion 13 in the example of FIG. 20A) or to the fibrous body 12d or the bonding-targets, and then the fibrous body 12d may be sandwiched between the bonding-targets in such a way that the bonding-targets are pressed against the fibrous body 12d. Thereby, the adhesive layer 12 may be formed.

The fibrous body 12d is formed with fiber 12d1 having an electrical conductivity. The fibrous body 12d may be a fiber woven fabric into which the fibers 12d1 are woven, or may be a fiber knitted fabric into which the fiber 12d1 is knitted. The fibrous body 12d may be formed in a sheet shape, for example. In this case, a thickness direction of the sheet-shaped fibrous body 12d may be the same as a thickness direction of the adhesive layer 12. In one example, the fibrous body 12d may be an electrically conductive mesh (e.g., a metal mesh) formed with the fiber 12d1 having an electrical conductivity.

The fibrous body 12d has an electrical conductivity so that the adhesive layer 12 has an electrical conductivity. Since the fibrous body 12d is formed with the fiber 12d1, an entire contact surface of the adhesive layer 12 with the superconducting wire 1 is not an electrically conductive part (fibrous body 12d), and a proportion of the electrically conductive part occupied in the contact surface can be reduced depending on a density of the fiber 12d1 (e.g., depending on an opening ratio of the metal mesh as the fibrous body 12d). Thus, the fibrous body 12d constitutes the resistance-decrease suppression structure that imparts an electrical conductivity to the adhesive layer 12 while suppressing a decrease in contact resistance (contact resistivity) with the superconducting wire 1.

A different configuration example of the fibrous body 12 in the fifth modified example is described with reference to FIG. 20B and FIG. 20C. FIG. 20B is an enlarged sectional view illustrating the different configuration example of the fibrous body 12d in the fifth modified example. FIG. 20C corresponds to the enlarged view of FIG. 5A, and illustrates a case where the fibrous body 12d in FIG. 20B is used in the fifth modified example.

In this different configuration example, the fiber body 12d may be rolled or machined (cut) in advance before the fiber body 12d is used in the adhesive layer 12. In other words, as illustrated in FIG. 20B, the fiber body 12d is rolled or machined (cut) so that a large number of local regions 12f (the local regions 12f on a left side in FIG. 20B) included in the fiber body 12d and contacting with the superconducting wire 1 each become a flat surface or a surface close to a flat surface. Thereby, a large number of the local regions 12f each of which is a flat surface or close to a flat surface constitute a substantially flat portion that contacts with the superconducting wire 1. These local regions 12f are located along one imaginary plane. Similarly, in the fiber body 12d, also on a side (a right side in FIG. 20C) opposite to the above-described side, a large number of the local regions 12f are rolled or machined (cut) in such a way as to become a flat surface or a surface close to a flat surface and thereby constitute a substantially flat portion (e.g., the substantially flat portion contacting with the conductor portion 13).

Thus, the substantially flat portion included in the fiber body 12d and contacting with the superconducting wire 1 is formed to enable adjustment of a contact area between the fiber body 12d and the superconducting wire 1. Thereby, the contact resistivity (bypass resistance) can be accurately controlled. Similarly, a contact area between the fiber body 12d and the conductor portion 13 can also be adjusted as illustrated in FIG. 20C.

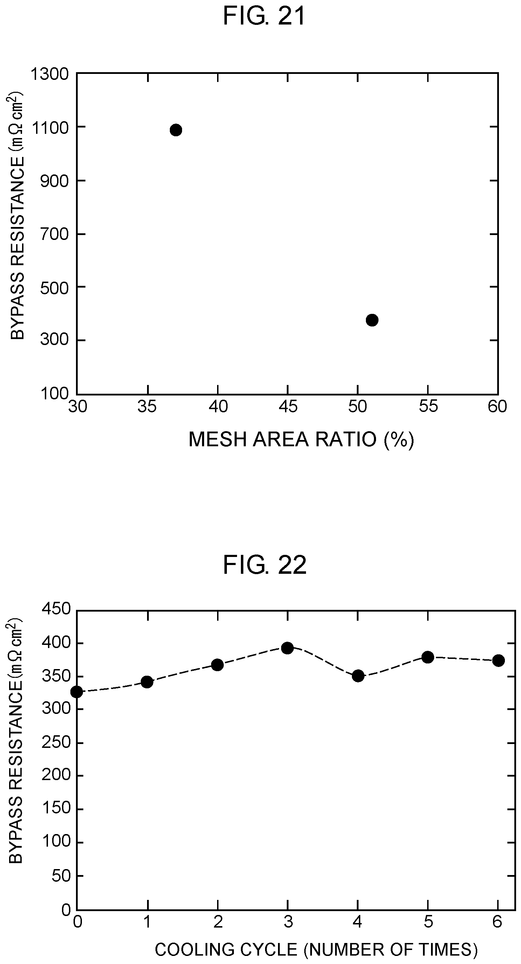

According to the fifth modified example, the contact resistance can be controlled to an arbitrary value by changing one or both of a density (e.g., an opening ratio of the metal mesh as the fibrous body 12d) of the fiber 12d, an an area of the substantially flat portion constituted by a large number of the local regions 12f in FIG. 20B. FIG. 21 illustrates the result of measuring the contact resistivity (bypass resistance) between the adhesive layer 12 and the superconducting wire 1 when the metal mesh is used as the fibrous body 12d. This measurement was performed for the adhesive layers 12 having different densities (mesh area ratios) of the metal mesh. The horizontal axis in FIG. 21 indicates a proportion (corresponding to a density of the metal mesh) of the metal portion on the surface of the sheet-shaped metal mesh. As understood from FIG. 21, the contact resistivity can be adjusted by changing a density of the metal mesh.

According to the fifth modified example, as illustrated in FIG. 20A or FIG. 20C, the adhesive layer 12 is formed to include the binder 12a and the fibrous body 12d, and thus, the current bypass for the superconducting coil 11 can be formed relatively easily by the adhesive layer 12.

Also in the fifth modified example, similarly to the above-described first embodiment, the adhesive layer 12 can be formed to have a small thickness. For example, the adhesive layer 12 can be formed to have a thickness equal to or smaller than 30 µm.

According to the fifth modified example, the fibrous body 12d may be formed to include the regularly arranged fibers 12d1. Thereby, the contact resistivity between the adhesive layer 12 and the superconducting wire 1 can be made stable.

FIG. 22 represents the measurement result corresponding to FIG. 9A, but represents the measured values of the contact resistivity (bypass resistance) in the case of the fifth modified example. In other words, the superconducting coil device 10 in which the adhesive layer 12 according to the fifth modified example is applied to that in the first embodiment was actually fabricated, and the contact resistivity (bypass resistance) for the superconducting coil device 10 was measured with respect to the repetition of the above-described cooling cycle, also in the fifth modified example, similarly to FIG. 9A. As understood from FIG. 22, also in the fifth modified example, the contact resistivity of the adhesive layer 12 with the superconducting wire 1 has high stability with respect to the repetition of the cooling cycle.

### (Sixth Modified Example)

In the above-described fifth modified example, the adhesive layer 12 further includes, in addition to the above-described binder 12a and fibrous body 12d, one or both of the powdered electrically conductive filler 12b and the powdered insulation filler 12c that are described above in the first embodiment and the like. Here, a plurality of types of electrically conductive fillers (e.g., the above-described first type of electrically conductive filler 12b1 and the above-described second type of electrically conductive filler 12b2) having mutually different electrical conductivities may be provided as the electrically conductive fillers 12b.

Thus, using one or both of the powdered electrically conductive filler 12b and the powdered insulation filler 12c in addition to the fibrous body 12d (e.g., the metal mesh) in the adhesive layer 12 enables a value of the contact resistance (contact resistivity) between the adhesive layer 12 and the superconducting wire 1 to be controlled more accurately.

### (Seventh Modified Example)

In the first embodiment, the adhesive layer 12 may be provided instead of the inter-turn insulation portion 15, similarly to the above-described case of FIG. 17. In other words, in the seventh modified example, in each coil layer, the adhesive layer 12 is provided between each pair of the turns T adjacent to each other in the axial direction in such a way that the adhesive layer 12 contacts with these turns T. Thereby, in each coil layer, the adhesive layer 12 constitutes a current bypass that electrically connects, to each other, each pair of the turns T adjacent to each other in the axial direction.

The seventh modified example may be configured as follows. The interlayer insulation portion 14 is provided between each pair of the coil layers adjacent to each other in the radial direction, and electrically insulates these coil layers from each other. Differently from FIG. 3, the adhesive layer 12 does not need to be provided between the coil layers adjacent to each other in the radial direction. Differently from FIG. 3, the conductor portion 13 may be omitted. The other matters concerning the seventh modified example may be the same as those in the first embodiment.

### [Reference Signs List]

- 1: superconducting wire
- 1a: superconducting layer
- 1b: substrate layer
- 1c: stabilization layer
- 1a: bundle-type superconducting wire
- 2: reel
- 3: holding member
- 10: superconducting coil device
- 11: superconducting coil
- 12: adhesive layer
- 12a: binder
- 12b: electrically conductive filler
- 12b1: first type of electrically conductive filler
- 12b2: second type of electrically conductive filler
- 12c: insulation filler
- 12d: fibrous body
- 12d1: fiber
- 12f: local region
- 13: conductor portion
- 14: interlayer insulation portion
- 15: inter-turn insulation portion
- 16: interlayer conductor portion
- 17: interlayer insulation portion
- 18: connection portion
- c: central axis
- t: turn
- Ta, Tb: interlayer turn

## Claims

1. A superconducting coil device comprising:
a superconducting coil including a superconducting wire wound into a coil shape; and
an adhesive layer constituting at least a part of a current bypass for the superconducting coil, the adhesive layer including a binder, an electrical conductivity being imparted to the adhesive layer, wherein
the adhesive layer includes a resistance-decrease suppression structure that imparts the electrical conductivity to the adhesive layer while suppressing a decrease in contact resistance with the superconducting wire.

2. The superconducting coil device according to claim 1, wherein
the resistance-decrease suppression structure includes an electrically conductive filler and an electrical-insulation filler.

3. The superconducting coil device according to claim 1, wherein
the resistance-decrease suppression structure includes a fibrous body formed with fiber having an electrical conductivity.

4. The superconducting coil device according to claim 3, wherein
the resistance-decrease suppression structure further includes one or both of a powdered electrically conductive filler and a powdered insulation filler.

5. The superconducting coil device according to any one of claims 1 to 4, wherein
the adhesive layer contacts with a plurality of turns of the superconducting coil on one side in a thickness direction of the adhesive layer,
the superconducting coil device includes a conductor portion that contacts with the adhesive layer on an opposite side of the adhesive layer in the thickness direction and that extends along the adhesive layer, and
the adhesive layer and the conductor portion constitute the current bypass that electrically connects the plurality of turns to each other.

6. The superconducting coil device according to any one of claims 1 to 4, wherein
the superconducting wire includes a bundle of a plurality of superconducting wires,
the plurality of superconducting wires are bonded to each other via the adhesive layer in such a way that the adhesive layer constitutes the current bypass electrically connecting the plurality of superconducting wires to each other.

7. The superconducting coil device according to claim 2 or 4, wherein
the adhesive layer includes, as the electrically conductive filler, a plurality of types of electrically conductive fillers having mutually different electrical conductivities.

8. The superconducting coil device according to claim 5, further comprising:
an inter-turn insulation portion provided in an area sandwiched between each pair of the turns adjacent to each other.

9. The superconducting coil device according to claim 5, wherein
the superconducting coil includes a configuration in which the superconducting wire is wound around a central axis of the superconducting coil while being shifted in an axial direction of the superconducting coil,
one coil layer is defined as the configuration, and the superconducting wire is one continuous superconducting wire or a plurality of superconducting wires connected in series, and forms a plurality of coil layers arranged in a radial direction of the superconducting coil, and
the current bypass is formed for each of the plurality of coil layers.

10. The superconducting coil device according to claim 9, further comprising:
an interlayer insulation portion provided between the inner and outer coil layers adjacent to each other in the radial direction, the interlayer insulation portion electrically insulating the inner and outer coil layers from each other.

11. The superconducting coil device according to claim 9, wherein
the superconducting wire forms the inner coil layer by extending around the central axis while being shifted in the axial direction from an axial-direction one end to an axial-direction opposite end, and is then shifted to a radial-direction outer side of the inner coil, and forms the outer coil layer by extending around the central axis while being shifted in the axial direction from the axial-direction opposite end to the axial-direction one end, and
the superconducting coil device comprises an interlayer current bypass formed in such a way as to electrically connect one or more turns located at an axial-direction opposite end portion in the inner coil layer to one or more turns located at an axial-direction opposite end portion in the outer coil layer.

12. The superconducting coil device according to claim 11, wherein
the interlayer current bypass includes:
a part included in the adhesive layer and sandwiched in the radial direction between the axial-direction opposite end portion of the inner coil layer and the axial-direction opposite end portion of the outer coil layer;
a part included in the conductor portion and sandwiched in the radial direction between the axial-direction opposite end portion of the inner coil layer and the axial-direction opposite end portion of the outer coil layer; and
an interlayer conductor portion electrically connecting the part of the conductor portion to the axial-direction opposite end portion of the inner or outer coil layer.

13. The superconducting coil device according to claim 9, wherein
for each of the coil layer, the adhesive layer extends in the axial direction and in a peripheral direction of the superconducting coil in such a way as to contact with an outer or inner peripheral surfaces of the plurality of turns of the superconducting wire forming the coil layer, and the conductor portion extends in the axial direction and in the peripheral direction in such a way as to contact with the outer or inner peripheral surface of the adhesive layer.

14. The superconducting coil device according to claim 5, wherein
the superconducting coil includes a configuration in which the superconducting wire is wound around a central axis of the superconducting coil while being shifted outward in a radial direction and while an axial-direction position of the superconducting wire remains constant,
one coil layer is defined as the configuration, and the superconducting wire is one continuous superconducting wire or a plurality of superconducting wires connected in series, and forms a plurality of coil layers arranged in an axial direction of the superconducting coil, and
the current bypass is formed for each of the plurality of coil layers.

15. The superconducting coil device according to claim 14, further comprising:
an interlayer insulation portion provided between the coil layers adjacent to each other in the axial direction, the interlayer insulation portion electrically insulating the adjacent coil layers from each other.

16. The superconducting coil device according to claim 14, further comprising:
an interlayer conductor portion for the coil layers adjacent to each other in the axial direction, the interlayer conductor portion electrically connecting a radial-direction innermost or outermost turn of one of the adjacent coil layers to a radial-direction innermost or outermost turn of another of the adjacent coil layers.

17. The superconducting coil device according to claim 16, wherein
for the coil layers adjacent to each other in the axial direction,
from a position of forming the innermost or outermost turn in one of the adjacent coil layers, the superconducting wire further extends continuously in a peripheral direction of the superconducting coil while being shifted inward or outward in the radial direction and toward another of the adjacent coil layers in the axial direction, thereby forms an interlayer turn, and then extends continuously while being shifted outward or inward in the radial direction and toward the another of the adjacent coil layers in the axial direction, and thereby reach a position of forming the innermost or outermost turn in the another of the adjacent coil layers, and
the interlayer conductor portion is electrically connected to the interlayer turn.

18. The superconducting coil device according to any one of claims 1 to 4, wherein
the superconducting coil includes a configuration in which the superconducting wire is wound around a central axis of the superconducting coil while being shifted outward in a radial direction and while an axial-direction position of the superconducting wire remains constant, and
the adhesive layer is provided between each pair of turns that are included in the superconducting coil and that are adjacent to each other in the radial direction, in such a way that the adhesive layer constitutes the current bypass electrically connecting the adjacent turns to each other.

19. The superconducting coil device according to any one of claims 1 to 4, wherein
the superconducting wire includes a superconducting layer of a high-temperature superconductor or a low-temperature superconductor.
